# EUROPEAN PATENT APPLICATION

(11) **EP 1 850 154 A1**
(43) Date of publication of application: **31.10.2007**
(21) Application number: 06713787.7
(22) Date of filing: 15.02.2006
(51) Int. Cl.: G02B 5/22, G09F 9/00

(54) **NEAR INFRARED RAY ABSORBING FILTER, OPTICAL FILTER FOR PLASMA DISPLAY AND PLASMA DISPLAY PANEL**

(30) Priority: 16.02.2005 JP 2005039435; 16.02.2005 JP 2005039436; 16.02.2005 JP 2005039437
(71) Applicant: Mitsubishi Polyester Film Corporation, Tokyo 108-0014 (JP)
(72) Inventor: NAKAMARU, Masashi, Central Research Laboratory, Maibara-shi, Shiga 521-0234 (JP); MIKI, Takatoshi, c/o Central Research Laboratory, Maibara-shi, Shiga 521-0234 (JP)
(74) Representative: Sherrard-Smith, Hugh
(86) International application number: PCT/JP2006/302646
(87) International publication number: WO 2006/088056

(57) **Abstract**

A near infrared ray absorbing filter is a film gained by biaxially oriented polyester having a near infrared ray absorbing agent, and the melting point of this polyester is no higher than 230°C. The optical filter for a plasma display is provided with a near infrared ray blocking layer made of polyester containing a near infrared ray absorbing agent and an image quality correcting layer made of polyester containing a compound which absorbs visible light having an absorption maximum wavelength in a range from 560 nm to 600 nm. These layers are layered through an integrated process by means of a co-extrusion method, according to which these layers are melted and extruded together from a co-extrusion process, and thus, a biaxially oriented film is formed. The melting point of the polyester in these layers is no higher than 230°C.

## Description

### TECHNICAL FIELD

The present invention relates to a near infrared ray absorbing filter for blocking near infrared rays, an optical filter for plasma display and a plasma display panel.

### BACKGROUND ART

In recent years, demand for high quality image of displays has increased with the start of BS digital high vision broadcasting and the spread of DVD players. In this situation, plasma display panels (hereinafter abbreviated to PDP), which are displays having high image quality substituting currently widespread CRT displays, appeared on the market as consumer use and have been drawing attention. PDPs emit visible light of red, blue and green by exciting ultraviolet rays through discharge in an inert gas, such as neon or xenon so that the ultraviolet rays hit fluorescent material. It is known, however, that electromagnetic waves of various wavelengths are generated through the discharge in the inert gas, in addition to ultraviolet rays.

These electromagnetic waves include light having a wavelength in the near infrared ray region, which is often used for operation of remote controllers. In the case where a PDP is left emitting light of this wavelength, the remote controller ends up malfunctioning and various home electronic appliances are negatively affected. In addition, it is said that infrared ray communication between electronic appliances is also negatively affected. As a measure against this, it has been proposed that a near infrared ray filter for blocking near infrared rays be attached to the front of plasma display panels. Such near infrared ray filters are generally manufactured by coating the surface of a highly transparent plastic film with an organic solvent in which a near infrared ray absorbing agent, a polymer binder and other additives are dissolved or dispersed, and drying this so that the solvent is removed (see Patent Document 1).

These near infrared ray filters, however, have a defect that it is extremely difficult to roll up a film after it is coated and dried because the surface of the coating layer to which a near infrared ray absorbing agent is added in order to maintain transparency for the filter is extremely flat. In addition, this coating layer is soluble in organic solvents, and therefore, there is a defect that when it makes contact with an organic solvent, the surface becomes of a coarse state or defects such as stains are easily caused. This defect poses restrictions on the process of forming a new layer on the coating layer through application or layering in order to provide a new function to the filter and simple removal of stains by making an organic solvent contact with the filter.

In order to get rid of the above described defect, Patent Document 2 proposes a method for manufacturing a filter by extruding a resin into which a near infrared ray absorbing agent is kneaded instead of coating the resin with it. As a result of examination by the inventors, however, it was found that near infrared ray absorbing agents for displays having high image quality are dyes having low resistance to heat, and therefore, when polyester into which they are kneaded is extruded, the dye deteriorates (decomposes or changes in quality), which lowers the near infrared ray absorbing performance from the original level, and furthermore, the visible light range is partially absorbed as a result of the deterioration of the dye, and thus, the color reproducing performance of the display is damaged, and thus, the filter appears to be tinted in undesirable colors of substances, such as yellow or green.

Meanwhile, it is known that fluorescent material of red, blue and green respectively emit light as a result of excitation with ultraviolet rays as described above. Light of which the center wavelength is somewhere around 590 nm, that is, so-called neon orange light, is emitted when neon atoms return to the ground state after being excited (see Patent Document 3). Therefore, plasma displays have a defect that orange is mixed with red and vivid red cannot be gained, and thus, a technique for installing a color filter for correcting color tone using a pigment which has an absorption maximum wavelength in a range from 560 nm to 600 nm of light on the front surface of plasma displays so that neon orange light is well absorbed, making the red of the plasma display appear vividly is used. As the method for protecting the pigment used in this color filter from deterioration caused by ultraviolet rays, kneading an ultraviolet ray absorbing agent into the polyester film itself which is used as the protective film for the front surface plate of the plasma display so that the polyester film has a function of blocking ultraviolet rays has been examined (see Patent Document 4).

In the case where the near infrared ray absorbing agent is prevented from deteriorating due to ultraviolet rays, a process for attaching a film which contains an ultraviolet ray absorbing agent to a film which contains a near infrared ray absorbing agent is required according to the prior art, and therefore a problem arises that manufacture becomes difficult. This is because bubbles remain on joined surfaces due to the involvement of air when the uniformity on the surface is disturbed, and microscopic foreign substances which float in the air are sandwiched between the surfaces, and thus, control is not easy. Furthermore, many layers overlap in the used optical filter, and therefore, the quality of the entirety is the total quality of the respective layers, which makes manufacture difficult. The yield of the entirety, including the process for attaching, for example, is theoretically the total yield of the respective processes for attaching. Accordingly, it is required to reduce the number of processes for attaching for efficient manufacture.
[Patent Document 1] Japanese Laid-Open Patent Publication 2000-121828
[Patent Document 2] Japanese Laid-Open Patent Publication 2002-286929
[Non-patent Document 3] Video Information Media Academic Journal Vol. 51, No. 4, p. 459-463 (1997)
[Patent Document 4] Japanese Laid-Open Patent Publication 2004-10875

### DISCLOSURE OF THE INVENTION

A first objective of this invention is to prevent the near infrared ray absorbing agent from deteriorating (decomposing or changing in quality) focusing on the melting point of polyester, so that the performance required for near infrared ray absorbing filters, optical filters for plasma displays, and plasma display panels is maintained over a long period of time.

A second objective of this invention is to provide an ultraviolet ray blocking function to one independent near infrared ray absorbing filter so that a near infrared absorbing agent is prevented from deteriorating (decomposing or changing in quality), that the performance of the near infrared ray absorbing filter and the plasma display panel is maintained, and that the efficiency in the Manufacture is increased.

A third objective of this invention is to provide, in addition to near infrared ray blocking performance, ultraviolet ray blocking function to one independent optical filter for a plasma display having an image quality correcting layer, so that the near infrared ray absorbing agent is prevented from deteriorating (decomposing or changing in quality) the performance required for optical filters for plasma displays and plasma display panels is maintained, and that the efficiency in the manufacture is increased.

The near infrared ray absorbing filter in accordance with a first aspect of the present invention is a biaxially oriented polyester film having a near infrared ray absorbing agent (for example a diimonium salt compound), and the melting point of this polyester is set to no higher than 230°C.

In terms of the melting point of polyester, the following is considered. Decomposition of diimonium salt compounds, even when the resistance to heat is improved, accelerates at 260°C and higher, and decomposition of near infrared ray absorbing agents of which the resistance to heat is particularly poor accelerates at 240°C and higher. Melt extrusion using an extruder is usually carried out at a melt line temperature which is the sum of the melting point of polyester and the margin temperature (approximately 30°C). Accordingly, the upper limit of the melting point of polyester is 230°C in the diimonium salt compound of which the resistance to heat has improved.

Meanwhile, it is necessary for the lower limit of the melting point of polyester to be higher than the highest temperature when the filter is used, and temperatures up to the temperature which is lower than the melting point by 50°C are generally considered the temperature for continuous use. The highest temperature for PDP is approximately 120°C, and therefore, the lower limit of the melting point is approximately 170°C. It is preferable for the melting point to be higher when stable use of the PDP is taken into consideration, and 200°C or higher is practical, and thus preferable.

Taking the above into consideration, it is necessary for the melting point of this polyester to be no higher than 230°C, and it is preferable for it to be no lower than 170°C and no higher than 230°C, it is more preferable for it to be no lower than 200°C and no higher than 225°C, and it is most preferable for it to be no lower than 210°C and no higher than 220°C.

Incidentally, this near infrared ray absorbing filter may be used as a base film for transparent touch panels or a base film for prism sheets used for liquid crystal displays, in addition to plasma display panels, or may be used as a base film for a protective film to which a functional layer, such as shield for electromagnetic waves for preventing electrification and reflection.

It becomes possible to process the filter in accordance with the first aspect at a temperature which is lower than the temperature where the near infrared ray absorbing agent decomposes, and therefore, the infrared ray absorbing performance can be maintained while preventing the near infrared ray absorbing agent from deteriorating (decomposing or changing in quality).

The optical filter for a plasma display in accordance with a second aspect is a biaxially oriented film provided with a near infrared ray blocking layer made of polyester containing a near infrared ray absorbing agent and an image quality correcting layer made of polyester containing a compound which absorbs visible light having an absorption maximum wavelength in a range from 560 nm to 600 nm, wherein these layers are layered through integral molding by means of a co-extrusion method, according to which these layers are melted and extruded together from an extruder, and the melting point of this polyester is set no higher than 230°C.

There are cases where this near infrared ray blocking layer and the image quality correcting layer are layered through direct contact, as well as cases where indirectly layered with another layer intervening in between. It is possible to process the filter in accordance with the second aspect at a temperature that is lower than the temperature at which the near infrared ray absorbing agent decomposes, and therefore, the near infrared ray absorbing performance can be maintained while preventing the near infrared ray absorbing agent from deteriorating (decomposing or changing in quality). Thus, the generation of a new absorption range is prevented in the visible light range due to the deterioration of the near infrared ray absorbing agent, so that the color reproducing performance of the filter can be maintained. In addition, according to the co-extrusion method, the number of processes for layering can be reduced, so that the manufacture of an optical filter for a plasma display having an ultraviolet ray blocking function can be simplified, and at the same time, the manufacture thereof is completed along the melt line of the melted resin, which does not make contact with air, and in addition, the resin can be kept clean using a foreign substance removing filter in the melt line, and thus, control over manufacture can be made easy.

It is possible for a plasma display panel to include a near infrared ray absorbing filter in accordance with the first aspect, or an optical filter for a plasma display in accordance with the second aspect, as a portion of a number of multilayer bodies. In this case, the plasma display panel can maintain color tone having a preferable appearance.

Incidentally, in order for the plasma display to maintain its color reproducing performance, it is possible to control the transmittance of visible light having a wavelength of 380 nm to 780 nm in the optical filter in accordance with the first aspect to 30% to 90%, preferably 50% to 90%, and more preferably 70% to 90%.

It is possible to control the above described transmittance of visible light in the filter in accordance with the second aspect to 20% to 80%, preferably 30% to 70%, and more preferably 35% to 60%. In addition, in order to prevent malfunctioning of the remote controller and negative effects on infrared ray communication between electronic appliances, it is possible to control the transmittance of near infrared rays having a wavelength of 820 nm to 1100 nm in the optical filter in accordance with both the first and second aspects to 0.1% to 19%, preferably 0.1% to 9%, and more preferably 0.1% to 4%.

The near infrared ray absorbing filter in accordance with a third aspect of the present invention is a biaxially oriented film in which a near infrared ray blocking layer made of polyester containing a near infrared ray absorbing agent (for example a diimonium salt compound) and an ultraviolet ray blocking layer made of polyester containing an ultraviolet ray absorbing agent are layered.

The near infrared ray absorbing filter in accordance with a fourth aspect of the present invention is a biaxially oriented film provided with a near infrared ray blocking layer made of polyester containing a near infrared ray absorbing agent (for example a diimonium salt compound) and an ultraviolet ray blocking layer made of polyester containing an ultraviolet ray absorbing agent, wherein these layers are layered through integrated process by means of a co-extrusion method, according to which these layers are melted and extruded together from an extruder. There are cases where this near infrared ray blocking layer and the ultraviolet ray blocking layer are layered through direct contact, as well as cases where they are indirectly layered with another layer intervening in between.

In the near infrared ray absorbing filter in accordance with a fifth aspect of the present invention, a first biaxially oriented film having a near infrared ray blocking layer made of polyester containing a near infrared ray absorbing agent (for example a diimonium salt compound) and a second biaxially oriented film having an ultraviolet ray blocking layer made of polyester containing an ultraviolet ray absorbing agent are layered on top of each other. There are cases where the first film and the second film are layered through direct contact, as well as cases where they are indirectly layered with another layer intervening in between.

In accordance with the third to fifth aspects, the above described near infrared ray absorbing filters have ultraviolet ray blocking function themselves, and therefore, the near infrared ray absorbing performance can be maintained while preventing the near infrared ray absorbing agent from deteriorating (decomposing or changing in quality). In addition, according to the co-extrusion method in the fourth aspect, the number of processes for layering can be reduced, so that the manufacture of a near infrared ray absorbing filter having ultraviolet ray blocking function can be simplified, and at the same time, the process is completed in the melt line of the melted resin, which does not make contact with air, and in addition, the resin can be kept clean using a foreign substance removing filter in the melt line, and thus, control over manufacture can be made easy.

In accordance with the third to fifth aspects, the melt point of polyester in the above described near infrared ray blocking layer may be set to 230°C or lower. The reason for this is the same as in the case of the first aspect.

The near infrared ray absorbing filters in accordance with the third to fifth aspects may be applied to a plasma display panel. In this case, it is preferable for the ultraviolet ray blocking layer to be placed outside the near infrared ray blocking layer, in order to maintain color tone having a preferable appearance.

The optical filter for a plasma display in accordance with a sixth aspect of the present invention is a biaxially oriented film in which a near infrared ray blocking layer made of polyester containing an infrared ray absorbing agent, an ultraviolet ray blocking layer made of polyester containing an ultraviolet ray absorbing agent and an image quality correcting layer made of polyester containing a compound which absorbs visible light having an absorption maximum wavelength in a range from 560 nm to 600 nm are layered on top of each other.

The optical filter for a plasma display in accordance with a seventh aspect is a biaxially oriented film provided with a near infrared ray blocking layer made of polyester containing an infrared ray absorbing agent, an ultraviolet ray blocking layer made of polyester containing an ultraviolet ray absorbing agent and an image quality correcting layer made of polyester containing a compound which absorbs visible light having an absorption maximum wavelength in a range from 560 nm to 600 nm, where these layers are layered through integrated process by means of a co-extrusion method, according to which these layers are melted and extruded together from an extruder. There are cases where the near infrared ray blocking layer, the ultraviolet ray blocking layer and the image quality correcting layer are layered through direct contact, as well as cases where they are indirectly layered with another layers intervening in between.

In the optical filter for a plasma display in accordance with an eighth aspect, a biaxially oriented film provided with an ultraviolet ray blocking layer made of polyester containing an ultraviolet ray absorbing agent and an image quality correcting layer made of polyester containing a compound which absorbs visible light having an absorption maximum wavelength in a range from 560 nm to 600 nm, wherein these layers are layered through integrated process by means of a co-extrusion method, according to which these layers are melted and extruded together from an extruder, and a biaxially oriented film having a near infrared ray blocking layer made of polyester containing a near infrared ray absorbing agent are layered on top of each other. There are cases where the two films are layered through direct contact, as well as cases where they are indirectly layered with another layer intervening in between.

In the optical filter for a plasma display in accordance with a ninth aspect, a biaxially oriented film provided with a near infrared ray blocking layer made of polyester containing a near infrared ray absorbing agent and an image quality correcting layer made of polyester containing a compound which absorbs visible light having an absorption maximum wavelength in a range from 560 nm to 600 nm, where these layers are layered through integrated process by means of a co-extrusion method, according to which these layers are melted and extruded together from an extruder, and a biaxially oriented film having an ultraviolet ray blocking layer made of polyester containing an ultraviolet ray absorbing agent are layered on top of each other. There are cases where the two films are layered through direct contact, as well as cases where they are indirectly layered with another layer intervening in between.

In accordance with the sixth to ninth aspects, the optical filter for a plasma display having an image quality correcting layer has both near infrared ray blocking function and ultraviolet ray blocking function, and therefore, the near infrared ray blocking performance can be maintained by preventing the near infrared ray absorbing agent from deteriorating (decomposing or changing in quality), and thus, the generation of a new absorption range is prevented in the visible light range due to the deterioration of the near infrared ray absorbing agent, so that the color reproducing performance of the filter can be maintained.

In addition, particularly in accordance with the seventh aspect, when layering in accordance with the co-extrusion method, the number of processes for layering can be reduced, so that the manufacture of an optical filter for a plasma display having a near infrared ray blocking function and an ultraviolet ray blocking function can be simplified, and at the same time, the manufacture thereof is completed along the melt line of the melted resin, which does not make contact with air, and in addition, the resin can be kept clean using a foreign substance removing filter in the melt line, and thus, control over manufacture can be made easy.

It is desirable for the melting point of polyester in the above described near infrared ray blocking layer to be set no higher than 230°C. The reason for this is the same as described in the first aspect.

In order to maintain the color reproducing performance for the plasma display, it is desirable for the transmittance of visible light having a wavelength of 380 nm to 780 nm in the optical filter to be set to 20% to 80%, preferably 30% to 70%, and more preferably 35% to 60%. In addition, in order to prevent malfunctioning of the remote controller and negative effects on infrared ray communication between electronic appliances, it is desirable for the transmittance of near infrared rays having a wavelength of 800 nm to 1100 nm the optical filter to be set to 0.1% to 19%, preferably 0.1% to 9%, and more preferably 0.1% to 4%. Furthermore, in order to prevent the infrared ray absorbing pigments from deteriorating (decomposing or changing in quality), it is desirable for the transmittance of ultraviolet rays having a wavelength of 370 nm in the optical filter to be set to 0.01% to 5%, preferably 0.01% to 2%, and more preferably 0.01% to 1%.

### BRIEF DESCRIPTION OF THE DRAWINGS

Figs. 1(a) to 1(f) are diagrams schematically showing the multilayer structure of various types of near infrared ray absorbing filters;
Figs. 2(a) to 2(d) are diagrams schematically showing the multilayer structure of various types of optical filters for plasma displays;
Figs. 3(a) to 3(f) are diagrams schematically showing the multilayer structure of various types of optical filters for plasma displays;
Figs. 4(a) to 4(e) are diagrams schematically showing the multilayer structure of various types of plasma display panels;
Fig. 5 is a schematic diagram showing a process for molding a film using an extruder;
Figs. 6(a) to 6(g) are diagrams schematically showing the multilayer structure of various types of near infrared ray absorbing filters;
Figs. 7(a) to 7(f) are diagrams schematically showing the multilayer structure of various types of near infrared ray absorbing filters;
Figs. 8(a) and 8(b) are diagrams schematically showing the multilayer structure of various types of plasma display panels;
Figs. 9(a) to 9(h) are diagrams showing various types of optical filters for plasma displays;
Figs. 10(a) to 10(c) are diagrams showing various types of optical filters for plasma displays;
Figs. 11(a) to 11(c) are diagrams showing various types of plasma display panels; and
Fig. 12 is a schematic diagram showing a process for molding a film using an extruder.

### BEST FOR CARRYING OUT THE INVENTION

In the following, embodiments and examples of the present invention are described in reference to the drawings.

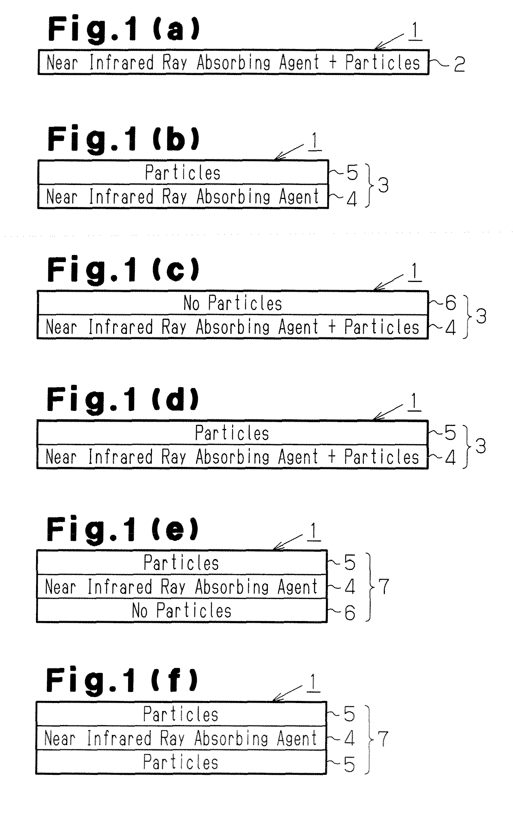

A near infrared ray absorbing filter 1 schematically shown in Fig. 1 (a) is a single layer film 2 formed through extrusion in which polyester into which a near infrared ray absorbing agent and predetermined particles are uniformly mixed and contained is biaxially oriented. As the near infrared ray absorbing agent, a diimonium salt compound can be used, but there are no particular limitations and other existing agents may be used as long as they are compounds which have an absorption maximum wavelength in range from 800 nm to 1100 nm of light. Phthalocyanine compounds, naphthalocyanine compounds, indoaniline compounds, benzopyran compounds, quinoline compounds, anthraquinone compounds, squarylium compounds, nickel complex compounds, copper compounds, tungsten compounds, indium tin oxide, antimony tin oxide, ytterbium phosphate, and mixtures of these, for example, may be used. Silica particles having a diameter of several µm may be used as the above described predetermined particles, and other existing particles, for example calcium carbonate particles, may be used.

Predetermined particles as those described above are exposed from at least one surface from among the two surfaces of the polyester film, and thus, the adhesiveness in a state where the polyester film is rolled up can be reduced, making sliding easier. The melting point of polyester at the time of extrusion molding is set no higher than 230°C.

A near infrared ray absorbing filter 1 schematically shown in Fig. 1 (b) is a biaxially oriented film 3 having two layers, or a near infrared ray blocking layer 4 made of polyester into which a near infrared ray absorbing agent is uniformly mixed, and a particle containing layer 5 made of polyester into which predetermined particles are uniformly mixed. These layers 4 and 5 are integrally processed and layered through a co-extrusion method. The co-extrusion method is a conventional, well Known method according to which a number of melted materials are extruded together from the head of an extruder.

A near infrared ray absorbing filter 1 schematically shown in Fig. 1(c) is a biaxially oriented film 3 having two layers, or an infrared ray blocking layer 4 made of polyester into which a near infrared ray absorbing agent and predetermined particles are uniformly mixed, and a particle free layer 6 made of polyester which does not contain predetermined particles. These layers 4 and 6 are integrally processed and layered through a co-extrusion method.

A near infrared ray absorbing filter 1 schematically shown in Fig. 1(d) is a biaxially oriented film 3 having two layers, or an infrared ray blocking layer 4 made of polyester into which a near infrared ray absorbing agent and predetermined particles are uniformly mixed, and a particle containing layer 5 made of polyester into which predetermined particles are uniformly mixed. These layers 4 and 5 are integrally processed and layered through a co-extrusion method.

A near infrared ray absorbing filter 1 schematically shown in Fig. 1(e) is a biaxially oriented film 7 having three layers, or a particle containing layer 5 made of polyester into which predetermined particles are uniformly mixed, a particle free layer 6 made of polyester which does not contain predetermined particles, and a near infrared ray blocking layer 4 which is placed between the particle containing layer 5 and the particle free layer 6, and made of polyester into which a near infrared ray absorbing agent is uniformly mixed. The layers 5, 6 and 4 are integrally processed and layered through a co-extrusion method.

A near infrared ray absorbing filter 1 schematically shown in Fig, 1(f) is a biaxially oriented film 7 having three layers, or a pair of particle containing layers 5 made of polyester into which predetermined particles are uniformly mixed, and a near infrared ray blocking layer 4 which is placed between the two particle containing layers 5 and made of polyester into which a near infrared ray absorbing agent is uniformly mixed. These layers 5 and 4 are integrally processed and layered through a co-extrusion method.

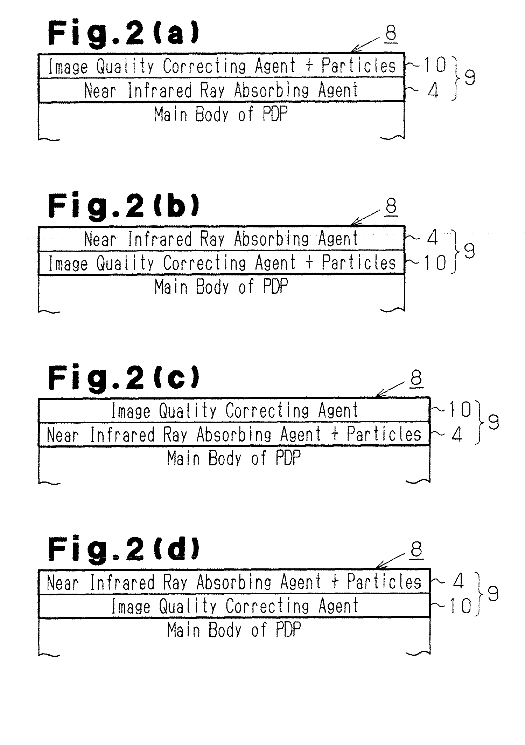

An optical filter 8 for plasma display schematically shown in Fig. 2(a) is a biaxially oriented film 9 having two layers, or a near infrared ray blocking layer 4 made of polyester into which a near infrared ray absorbing agent is uniformly mixed, and an image quality correcting layer 10 made of polyester into which an image quality correcting agent and predetermined particles are uniformly mixed. These layers 4 and 10 are integrally processed and layered through a co-extrusion method. As this image quality correcting agent, a tetraaza porphyrin compound, which absorbs visible light having an absorption maximum wavelength in a range from 560 nm to 600 nm, is used, but there are no particular limitations, and other existing compounds which absorb light having an absorption maximum wavelength in a range from 560 nm to 600 nm can be used. Cyanine compounds, squarylium compounds, azo compounds and phthalocyanine compounds, for example, can be used.

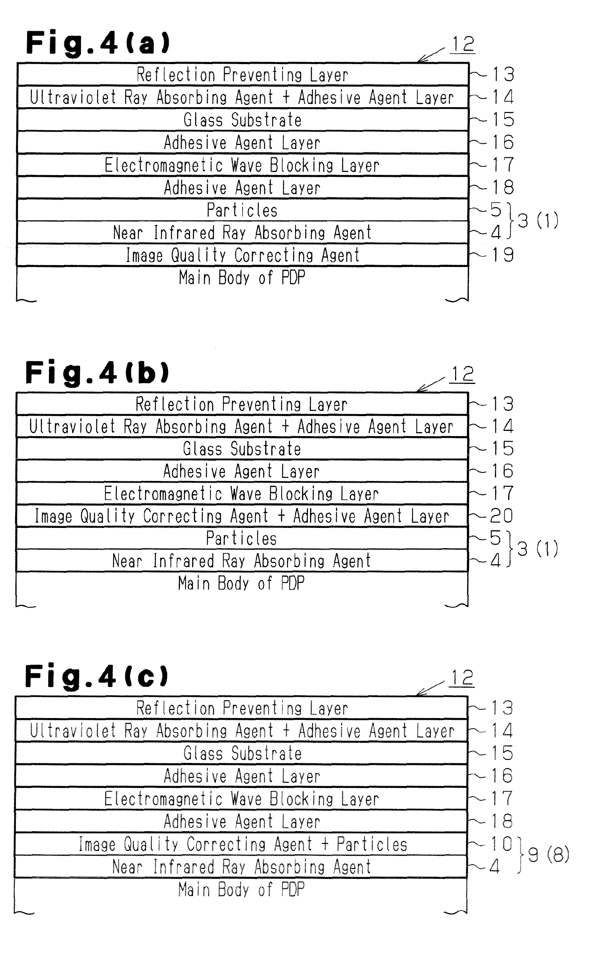

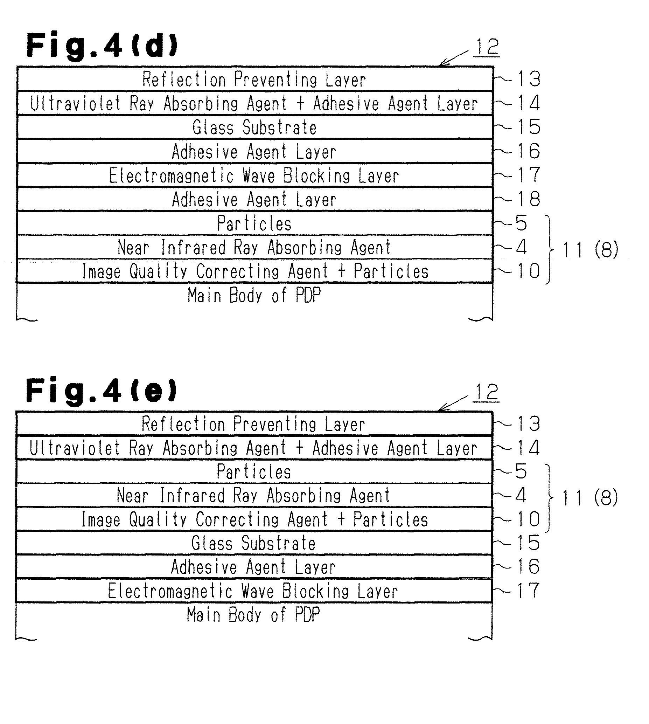

In the case where this optical filter 8 is used in the plasma display panels 12 shown in Figs. 4(a) to 4(e), the near infrared ray blocking layer 4 is provided in the vicinity of the main body of the plasma display panel (abbreviated to PDP).

An optical filter 8 for plasma display schematically shown in Fig. 2 (b) is similar to that shown in Fig. 2(a), but different from the filter shown in Fig. 2(a) in that the image quality correcting layer 10 is provided in the vicinity of the main body of the PDP.

An optical filter 8 for plasma display schematically shown in Fig. 2(c) is a biaxially oriented film 9 having two layers, or a near infrared ray blocking layer 4 and an image quality correcting layer 10. These layers 4 and 10 are integrally processed and layered through a co-extrusion method. The near infrared ray blocking layer 4 is made of polyester into which a near infrared ray absorbing agent and predetermined particles are uniformly mixed. The image quality correcting layer 10 is made of polyester into which an image quality correcting agent is uniformly mixed. The near infrared ray blocking layer 4 is provided in the vicinity of the main body of the PDP.

An optical filter 8 for plasma display schematically shown in Fig. 2(d) is similar to that shown in Fig. 2(c), but different from the filter shown in Fig. 2(c) in that the image quality correcting layer 10 is provided in the vicinity of the main body of the PDP.

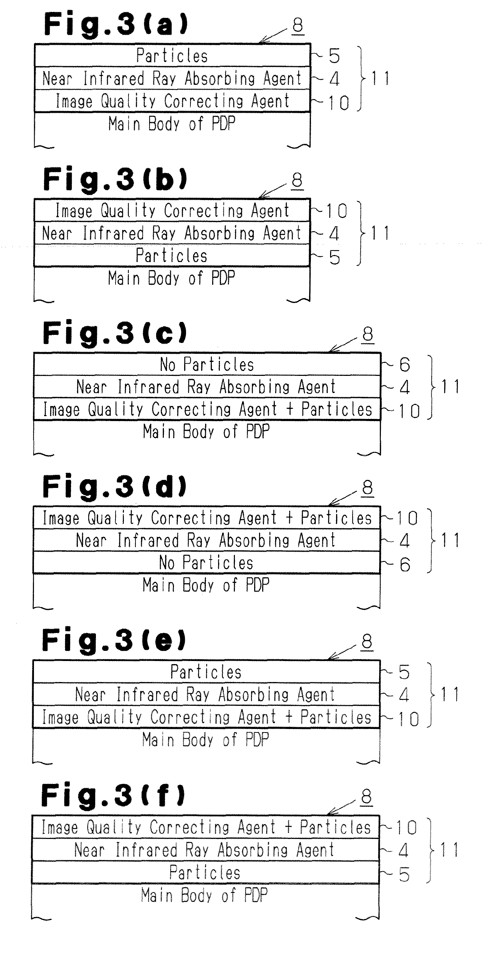

An optical filter 8 for plasma display schematically shown in Fig. 3(a) is a biaxially oriented film 11 having three layers, or an image quality correcting layer 10, a particle containing layer 5 and a near infrared ray blocking layer 4. These layers 10, 5, and 4 are integrally processed and layered through a co-extrusion method. The image quality correcting layer 10 is made of polyester into which an image quality correcting agent is uniformly mixed. The particle containing layer 5 is made of polyester into which predetermined particles are uniformly mixed. The near infrared ray blocking layer 4 is placed between the image quality correcting layer 10 and the particle containing layer 5, and made of polyester into which a near infrared ray absorbing agent is uniformly mixed. The image quality correcting layer 10 is provided in the vicinity of the main body of the PDP.

An optical filter 8 for plasma display schematically shown in Fig. 3 (b) is similar to that shown in Fig. 3(a), but different in that a particle containing layer 5 is provided in the vicinity of the main body of the PDP.

An optical filter 8 for plasma display schematically shown in Fig. 3(c) is a biaxially oriented film 11 having three layers, or an image quality correcting layer 10, a particle free layer 6 and a near infrared ray blocking layer 4. These layers 10, 6, and 4 are integrally processed and layered through a co-extrusion method. The image quality correcting layer 10 is made of polyester into which an image quality correcting agent and predetermined particles are uniformly mixed. The particle free layer 6 is made of polyester which does not contain predetermined particles. The near infrared ray blocking layer 4 is placed between the image quality correcting layer 10 and the particle free layer 6, and made of polyester into which a near infrared ray absorbing agent is uniformly mixed. The image quality correcting layer 10 is provided in the vicinity of the main body of the PDP.

An optical filter 8 for plasma display schematically shown in Fig. 3 (d) is similar to that shown in Fig. 3(c), but different from the filter shown in Fig. 3 (c) in that the particle free layer 6 is provided in the vicinity of the main body of the PDP.

An optical filter 8 for plasma display schematically shown in Fig. 3(e) is a biaxially oriented film 11 having three layers, or an image quality correcting layer 10, a particle containing layer 5 and a near infrared ray blocking layer 4. These layers 10, 5, and 4 are integrally processed and layered through a co-extrusion method. The image quality correcting layer 10 is made of polyester into which an image quality correcting agent and predetermined particles are uniformly mixed. The particle containing layer 5 is made of polyester into which predetermined particles are uniformly mixed. The near infrared ray blocking layer 4 is placed between the image quality correcting layer 10 and the particle containing layer 5, and made of polyester into which a near infrared ray absorbing agent is uniformly mixed. The image quality correcting layer 10 is provided in the vicinity of the main body of the PDP.

The optical filter for a plasma display schematically shown in Fig. 3(f) is similar to that shown in Fig. 3(e), but different from the filter of Fig. 3(e) in that the particle containing layer 5 is provided in the vicinity of the main body of the PDP.

The plasma display panel 12 schematically shown in Fig. 4(a) includes as a number of multilayer bodies a first film 13 of a single layer which is a reflection preventing layer, a second film 14 of a single layer which is an ultraviolet ray absorbing adhesive agent layer, a glass substrate 15, a third film 16 of a single layer which is an adhesive agent layer, a fourth film 17 of a single layer which is an electromagnetic wave blocking layer, a fifth film 18 of a single layer which is an adhesive agent layer, and a sixth film 19 of a single layer in which polyester into which an image quality correcting agent is uniformly mixed and contained is biaxially oriented, and additionally includes a film 3 which is the same as that in the near infrared ray absorbing filter 1 shown in Fig. 1(b).

The above described sixth film 19, film 3, fifth film 18, fourth film 17, third film 16, glass substrate 15, second film 14 and first film 13 are layered in sequence starting from the main body of the PDP. The sixth film 19 is attached to the near infrared ray blocking layer 4 of the film 3. The term "attach" conceptually includes cases where a liquid is applied and dried, objects are attached together using an adhesive agent, and an adhesive which is applied to processed paper is attached and transferred by removing the processed paper, and anything which is in such a state of attachment is referred to as film, in a broad sense.

Processed paper is paper or a film coated with a mold releasing agent or laminated with a resin having excellent mold releasing properties.

The plasma display panel 12 schematically shown in Fig. 4(b) includes as a number of multilayer bodies a first film 13 which is the same as that schematically shown in Fig. 4(a), a second film 14, a glass substrate 15, a third film 16 and a fourth film 17, and additionally includes a seventh film 20 of a single layer which is an adhesive agent layer containing an image correcting agent, and a film 3 in the near infrared ray absorbing filter 1 shown in Fig. 1(b). The above described film 3, seventh film 20, fourth film 17, third film 16, glass substrate 15, second film 14 and first film 13 are layered in sequence from the main body of the PDP.

The plasma display panel 12 schematically shown in Fig. 4(c) includes as a number of multilayer bodies a first film 13 which is the same as that shown in Fig. 4(a), a second film 14, a glass substrate 15, a third film 16, a fourth film 17 and a fifth film 18, and additionally includes a film 9 which is the same as that in the optical filter 8 for plasma display shown in Fig. 2(a). The above described film. 9, fifth film 18, fourth film 17, third film 16, glass substrate 15, second film 14 and first film 13 are layered in sequence from the main body of the PDP.

The plasma display panel 12 schematically shown in Fig. 4(d) includes as a number of multilayer bodies a first film 13 which is the same as that shown in Fig. 4(a), a second film 14, a glass substrate 15, a third film 16, a fourth film 17 and a fifth film 18, and additionally includes a film 11 which is the same as that in the optical filter 8 for plasma display shown in Fig. 3(e). The above described film 11, fifth film 18, fourth film 17, third film 16, glass substrate 15, second film 14 and first film 13 are layered in sequence from the main body of the PDP.

The plasma display panel 12 schematically shown in Fig. 4 (e) includes as a number of multilayer bodies a first film 13 which is the same as that shown in Fig. 4 (a), a second film 14, a glass substrate 15, a third film 16 and a fourth film 17, and additionally includes a film 11 which is the same as that in the optical filter 8 for plasma display shown in Fig. 3 (e). The above described fourth film 17, third film 16, glass substrate 15, film 11, second film 14 and first film 13 are layered in sequence from the main body of the PDP. The image quality correcting layer 10 of this film 11 is attached to the glass substrate 15.

### [Examples and Comparative Examples]

First, the polyester materials used in the following Examples 1 to 5 and Comparative Examples 1 and 2 are described.

A: A polyester material in pellet form of polycondensed ethylene glycol, isophthalic acid and terephthalic acid, including 600 ppm of silica particles having an average particle diameter of 2.2 microns. Melting point: 206°C.

B : A polyester material in pellet form gained by inducing reaction between 184 parts by weight of 1, 4-cyclohexane dicarboxylic acid (trans form: 98%), 158 parts by weight of 1, 4-cyclohexanedimethanol (trans form: 67%) and 0.9 parts by weight of a butanol solution of 6 weight % of Ti (OC₄H₉)₄ through polycondensation, and extracting the polymer gained after this polycondensation reaction into water in strand form, and after that, blending 0.1 weight % of amorphous silica having an average particle diameter of 2.4 µm in with the gained polyester material in pellet form and extruding the mixture in strand form. Melting point: 220°C.

C: A polyester material in pellet form gained from ethylene glycol, 1,4-CHDM (cyclohexanedimethanol) (ratio of sis/trans isomers = 32/68) and terephthalic acid through polycondensation and including 600 ppm of silica particles having an average particle diameter of 2.2 microns. This material is amorphous and does not have a melting point, and has a glass transition temperature of 80.5°C. Accordingly, this material exhibits fluidity at a temperatures of the glass transition temperature and higher.

D: A polyester material in pellet form gained from ethylene glycol and terephthalic acid through polycondensation and including 600 ppm of silica particles having an average particle diameter of 2.2 microns. Melting point : 253°C.

### [Example 1]

A material in which polyester A and KAYASORB IRG-022 (diimonium salt compound), made by Nippon Kayaku Co., Ltd., which is a near infrared ray absorbing agent, were dry blended at 300:1 was put into an extruder. This extruder carried out melt extrusion when the temperature in the melt line was set to 230°C, and thus, extruded the melted resin in sheet form from a T die. This melted resin in sheet form was cast on a cooling drum at 20°C. An electrostatic applying contact method was method at the time of casting. The thus manufactured unexpanded sheet was guided to a longitudinal expansion process. In this longitudinal expansion process, a roll expanding method was used, and the sheet was preheated to 70°C with a number of ceramic rolls, and an IR (infrared ray) heater was also used, and thus, the sheet was expanded in the longitudinal direction with a ratio of expansion of 3.0. Next, this uniaxially expanded film was guided to a tenter an preheated to 90°C, and after that, expanded in the direction of the width with a ratio of expansion of 4.0. After that, the film was tensed and stabilized through heating at a temperature of 180°C within the same tenter, and then, a slacking process was carried out in the direction of the width at a temperature of 150°C such that the film was slacked by 3%, and thus, a biaxially oriented polyester film having a thickness of 25 µm was gained.

As shown in Table 1, this film was used as the first layer, and the average transmittance (*1) of visible light having a wavelength of 380 nm to 780 nm and near infrared rays having a wavelength of 820 nm to 1100 nm was measured with a low scanning speed and a sampling pitch of 1 nm using a spectrophotometer UV3100, made by Shimadzu Corporation.

In addition, the appearance in terms of color of this film which is a filter was evaluated by the eye (*2) under a fluorescent lamp having three wavelengths. The gained results are shown in Table 1.

**[Table 1]**

| | Example 1 | Example 2 | Example 3 | Example 4 | Example 5 | Comparative Example 1 | Comparative Example 2 |
|---|---|---|---|---|---|---|---|
| Melting point of film (°C) | 206 | 220 | 206 | 220 | 220 | 253 | 253 |
| First layer | A + near infrared ray absorbing agent (300:1) | B + near infrared ray absorbing agent (300:1) | C | B | A + near infrared ray absorbing agent (270:1) | D + near infrared ray absorbing agent (300:1) | C |
| Second layer | None | None | A + near infrared ray absorbing agent (270:1) | A + near infrared ray absorbing agent (270:1) | B + image quality correcting agent (12000:1) | None | D + near infrared ray absorbing agent (270:1) |
| Third layer | None | None | C | B | None | None | C |
| Average transmittance of visible light having wavelength of 380 nm to 780 nm (%) *1 | 75 | 74 | 72 | 70 | 59 | 65 | 64 |
| Average transmittance of near infrared rays having wavelength of 820 nm to 1100 nm (%) *1 | 9.2 | 9.5 | 8.5 | 8.3 | 8.3 | 15 | 13 |
| Color of filter *2 | Brown | Brown | Brown | Brown | Blue | Green | Green |

### [Example 2]

In Example 2, polyester A of the above described Example 1 was changed to polyester B (melting point: 220°C), and at the same time, the temperature in the melt line was changed to 250°C. Other conditions for forming the film were the same as in Example 1, and a biaxially oriented polyester film having a thickness of 25 µm was gained. This film was evaluated in the same manner as that in Example 1. The results are shown in Table 1.

### [Example 3]

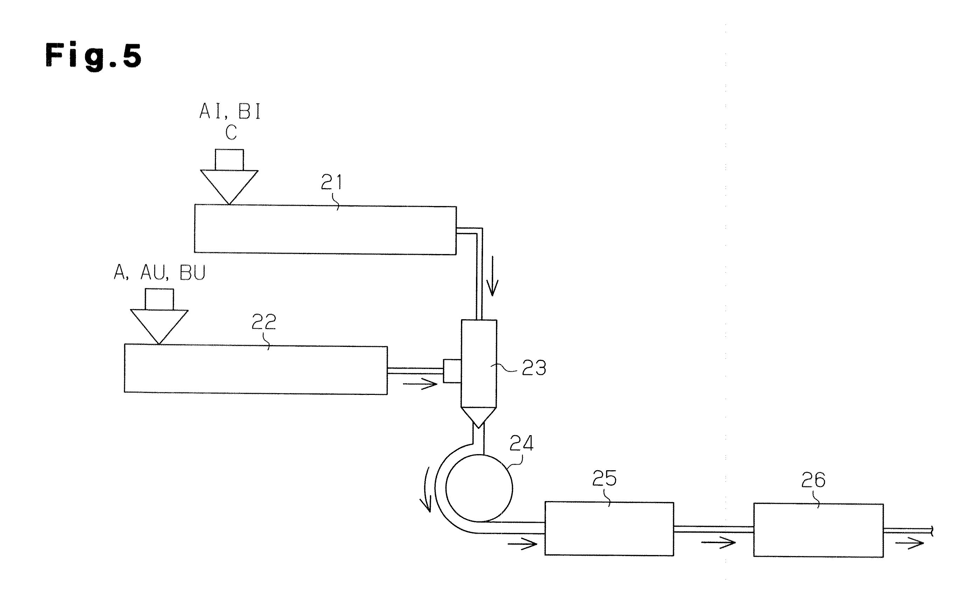

Polyester C (glass transition temperature: 80.5°C) was put in the first extruder 21 of the co-extrusion process shown in Fig. 5 while a material gained by dry blending polyester A and KAYASORB IRG-022, made by Nippon Kayaku Co., Ltd., which is a near infrared ray absorbing agent, at 270:1 was put into the second extruder 22. These extruders 21 and 22 carried out melt extrusion when the temperature in the melt line was set to 230°C, and the flow paths of the respective extruders 21 and 22 merged, so that polyester C layers sandwiched a polyester A layer as C/A/C in which the ratio of the thickness became 1/8/1 immediately before the above described melting extrusion, and thus, the melted resin was coextruded in sheet form from a T die 23. Accordingly, as shown in Table 1, the first and third layers were made of polyester C and the second layer was made of polyester A.

This melted resin in sheet form was cast on a cooling drum 24 at 20°C. At the time of casting, an electrostatic applying contact method was used. The thus manufactured unexpanded sheet was guided to a longitudinal expander 25. In this longitudinal expander 25, a roll expanding method was used, and the resin was preheated to 70°C using a number of ceramic rolls, and an IR heater was also used, and thus, the resin was expanded in the longitudinal direction at a ratio of expansion of 3.0. Next, this uniaxially expanded film was guided to a tenter and preheated to 90°C, and after that, guided to a lateral expander 26 so as to be expanded in the direction of the width at a ratio of expansion of 4.0. After that, the film was tensed and stabilized through heating at a temperature of 180°C within the same tenter, and then, a slacking process was carried out in the direction of the width at a temperature of 150°C such that the film was slacked by 3%, and thus, a biaxially oriented polyester film having a thickness of 25 µm was gained.

This film was evaluated in the same manner as that in Example 1. The results are shown in Table 1.

### [Example 4]

In Example 4, polyester C in the first and third layers of the above described Example 3 was changed to polyester B (melting point: 220°C), and in addition, the temperature in the melt line was changed to 250°C. Other conditions for forming the film were the same as in Example 3, and a biaxially oriented polyester film having a thickness of 25 µm was gained. This film was evaluated in the same manner as that in Example 1. The results are shown in Table 1.

### [Example 5]

A material gained by dry blending polyester A (melting point: 220°C) and a near infrared ray absorbing agent (KAYASORB IRG-022) at 270:1 was put into the first extruder 21, and a polyester material gained by dry blending polyester B and an image quality correcting agent (TAP-2, made by Yamada Chemical Co., Ltd., tetraaza porphyrin compound) which absorbs visible light having an absorption maximum wavelength in a range from 560 nm to 600 nm at 12,000 : 1 was put into the second extruder 22. These extruders 21 and 22 carried out melt extrusion when the temperature in the melt line was set to 250°C, and the flow paths of these merged immediately before this melt extrusion, such that the ratio of the thickness became 1/1, and thus, a melted resin was coextruded in sheet form from a T die 23.

This melted resin in sheet form was cast on a cooling drum 24 at 20°C. At the time of casting, an electrostatic applying contact method was used. The thus manufactured unexpanded sheet was guided to a longitudinal expander 25. In this expander 25, a roll expanding method was used, and the resin was preheated to 70°C using a number of ceramic rolls, and an IR heater was also used, and thus, the resin was expanded in the longitudinal direction at a ratio of expansion of 3.0. Next, this uniaxially expanded film was guided to a tenter and preheated to 90°C, and after that, guided to a lateral expander 26 so as to be expanded in the direction of the width at a ratio of expansion of 4.0. After that, the film was tensed and stabilized through heating at a temperature of 180°C within the same tenter, and then, a slacking process was carried out in the direction of the width at a temperature of 150°C such that the film was slacked by 3%, and thus, a biaxially oriented polyester film having a thickness of 50 µm was gained. As shown in Table 1, the first layer of the gained film included polyester A and the second layer included polyester B. This film was evaluated in the same manner as that in Example 1. The results are shown in Table 1.

### Comparative Example 1

In Comparative Example 1, polyester A (melting point: : 206°C) of the above described Example 1 was changed to polyester D (melting point: 253°C), and at the same time, the temperature in the melt line was changed to 290°C. Other conditions for forming the film were the same as in Example 1, and a biaxially oriented polyester film having a thickness of 25 µm was gained. This film was evaluated in the same manner as that in Example 1. The results are shown in Table 1.

### Comparative Example 2

In Comparative Example 2, polyester A (melting point: 206°C) of the above described Example 3 was changed to polyester D (melting point: 253°C), and at the same time, the temperature in the melt line was changed to 290°C. Other conditions for forming the film were the same as in Example 3, and a biaxially oriented polyester film having a thickness of 25 µm was gained. This film was evaluated in the same manner as that in Example 1. The results are shown in Table 1.

As is clear from Table 1, in the case of Examples 1 to 5, in which polyester of which the melting point is no higher than 230°C was used, the near infrared ray absorbing agent was prevented from deteriorating, and thus, the average transmittance of near infrared rays having a wavelength of 820 nm to 1100 nm was kept low. In addition, visible light could be prevented from being absorbed by deteriorated near infrared ray absorbing agent, and therefore, the average transmittance of visible light having a wavelength of 380 nm to 780 nm was kept high, and furthermore, it can be seen that the filter was not tinted yellow or green in terms of the appearance.

Next, further embodiments and examples of the present invention are described in reference to the drawings.

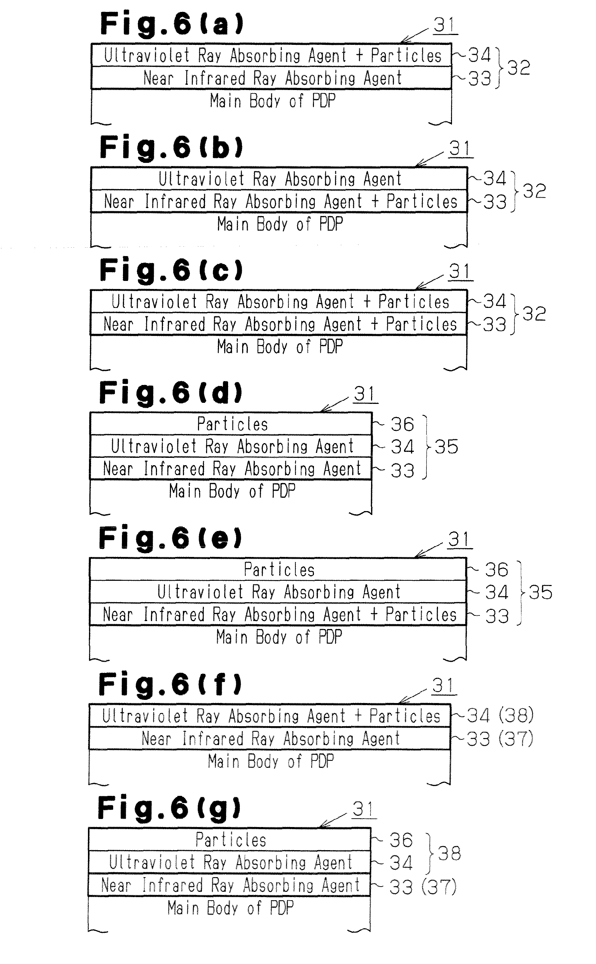

The near infrared ray absorbing filter 31 schematically shown in Fig. 6(a) is a biaxially oriented film 32 having two layers, or a near infrared ray blocking layer 33 made of polyester into which a near infrared ray absorbing agent was uniformly mixed, and an ultraviolet ray blocking layer 34 made of polyester into which an ultraviolet ray absorbing agent and predetermined particles. These layers 33 and 34 were uniformly mixed were layered through integral molding by means of a co-extrusion method. As this near infrared ray absorbing agent, a diimonium salt compound was used. However, there are no particular limitations, and other existing compounds which have an absorption maximum wavelength in a range from 800 nm to 1100 nm can be used, and phthalocyanine compounds, naphthalocyanine compounds, indoaniline compounds, benzopyran compounds, quinoline compounds, anthraquinone compounds, squarylium compounds, nickel complex compounds, copper compounds, tungsten compounds, indium tin oxide, antimony tin oxide, ytterbium phosphate and mixtures of these, for example, can be used.

As the ultraviolet ray absorbing agent, though a benzooxazinone compound was used, other existing compounds which absorb light having a maximum absorption in a range from 300 nm to 400 nm so as to efficiently block light in this range can be used without any particular limitations, irrespectively of whether they are organic or inorganic. As examples of organic ultraviolet ray absorbing agents, benzotriazole based agents, benzophenone based agents, salicylate ester based agents, triazine based agents, paraaminobenzoate based agents, cinnamate based agents, acrylate based agents, hindered amine based agents and cyclic imino ester based agents can be cited, and as inorganic ultraviolet ray absorbing agents, titanium oxide based agents, zinc oxide based agents and fine particle ion oxide based agents can used.

As the predetermined particles, silica particles having a diameter of several µm can be used, but other existing particles, for example calcium carbonate particles, can also be used. These predetermined particles are exposed from at least one surface from among the two surfaces of the polyester film, and thus, the adhesiveness in a state where the polyester film is rolled up can be reduced, making sliding easier. The melting point of polyester at the time of extrusion molding is set no higher than 230°C.

In the case where this near infrared ray absorbing filter 31 is used for a plasma display panel 41, the ultraviolet ray blocking layer 34 is placed outside the near infrared ray blocking layer 33 relative to the main body of the plasma display panel (PDP).

The near infrared ray absorbing filter 31 schematically shown in Fig. 6(b) is a biaxially oriented film 32 having two layers, or a near infrared ray blocking layer 33 made of polyester into which a near infrared ray absorbing agent and predetermined particles are uniformly mixed, and an ultraviolet ray blocking layer 34 made of polyester into which an ultraviolet ray absorbing agent is uniformly mixed. These layers 33 and 34 are layered through integral molding by means of a co-extrusion method. The ultraviolet ray blocking layer 34 is provided outside the near infrared ray blocking layer 33 relative to the main body of the PDP.

The near infrared ray absorbing filter 31 schematically shown in Fig. 6(c) is a biaxially oriented film 32 having two layers, or a near infrared ray blocking layer 3 made of polyester into which a near infrared ray absorbing agent and predetermined particles are uniformly mixed, and an ultraviolet ray blocking layer 4 made of polyester into which an ultraviolet ray absorbing agent and predetermined particles. These layers 3 and 4 are uniformly mixed are layered through integral molding by means of a co-extrusion method. The ultraviolet ray blocking layer 34 is provided outside the near infrared ray blocking layer 33 relative to the main body of the PDP.

The near infrared ray absorbing filter 31 schematically shown i n Fig. 6 (d) is a biaxially oriented film 35 having three layers, or a near infrared ray blocking layer 33 made of polyester into which a near infrared ray absorbing agent is uniformly mixed, a particle containing layer 36 made of polyester into which predetermined particles are uniformly mixed, and an ultraviolet ray blocking layer 34 which is placed between this near infrared ray blocking layer 33 and the particle containing layer 36 and made of polyester into which an ultraviolet ray absorbing agent is uniformly mixed. These layers 33, 36, and 34 are layered through integral molding by means of a co-extrusion method. The ultraviolet ray blocking layer 34 is provided outside the near infrared ray blocking layer 33 relative to the main body of the PDP.

The near infrared ray absorbing filter 31 schematically shown in Fig. 6(e) is a biaxially oriented film 35 having three layers, or a near infrared ray blocking layer 33 made of polyester into which a near infrared ray absorbing agent and predetermined particles are uniformly mixed, a particle containing layer 36 made of polyester into which predetermined particles are uniformly mixed, and an ultraviolet ray blocking layer 34 which is placed between this near infrared ray blocking layer 33 and the particle containing layer 36 and made of polyester into which an ultraviolet ray absorbing agent is uniformly mixed. These layers 33, 36, and 34 are layered through integral molding by means of a co-extrusion method. The ultraviolet ray blocking layer 34 is provided outside the near infrared ray blocking layer 33 relative to the main body of the PDP.

In the near infrared ray absorbing filter 31 schematically shown in Fig. 6 (f), a film 37 which is a near infrared ray blocking layer 33 made of polyester into which a near infrared ray absorbing agent is uniformly mixed is layered on and attached to a film 38 which is an ultraviolet ray blocking layer 34 made of polyester into which an ultraviolet ray absorbing agent and predetermined particles are uniformly mixed. The ultraviolet ray blocking layer 34 is provided outside the near infrared ray blocking layer 33 relative to the main body of the PDP.

The near infrared ray absorbing filter 31 schematically shown in Fig. 6(g) is provided with a biaxially oriented film 38 and a film 37. The biaxially oriented film 38 has two layers, or an ultraviolet ray blocking layer 34 made of polyester into which an ultraviolet ray absorbing agent is uniformly mixed, and a particle containing layer 36 made of polyester into which predetermined particles are uniformly mixed. These layers 34 and 36 are layered through integral molding by means of a co-extrusion method. The film 37 is a near infrared ray blocking layer 33 made of polyester into which a near infrared ray absorbing agent is uniformly mixed. The film 37 is layered on and attached to the ultraviolet ray blocking layer 34 of the film 38. The ultraviolet ray blocking layer 34 is provided outside the near infrared ray blocking layer 33 relative to the main body of the PDP.

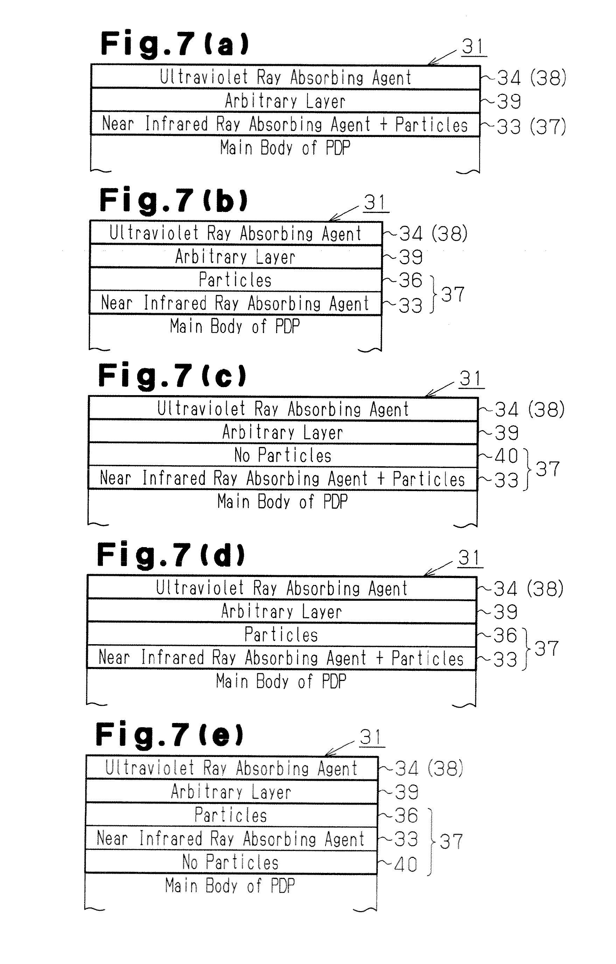

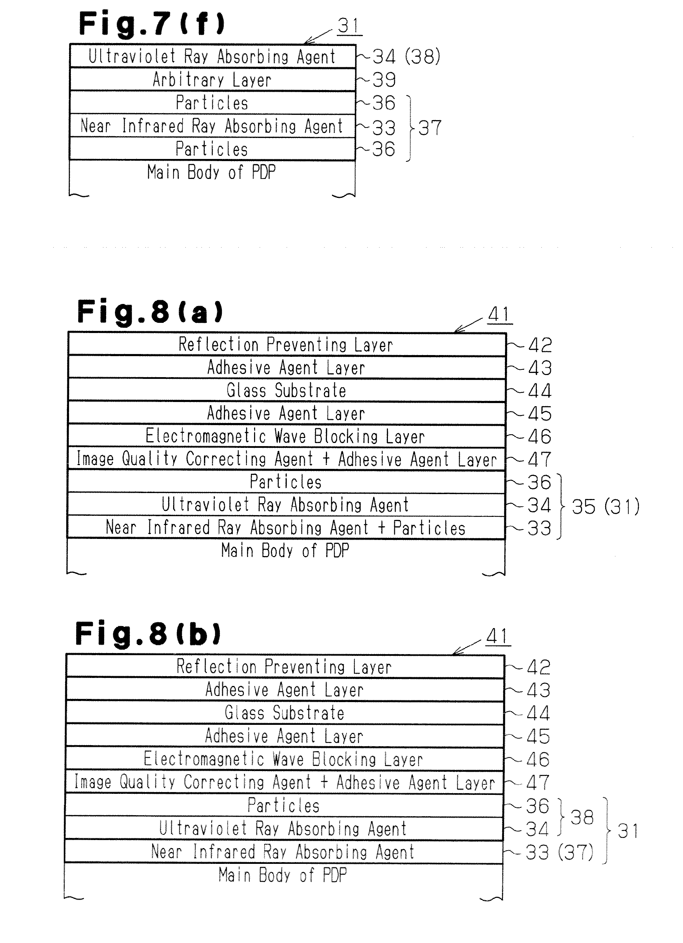

In the near infrared ray absorbing filter 31 schematically shown in Fig. 7 (a), a film 37 which is a near infrared ray blocking layer 33 made of polyester into which a near infrared ray absorbing agent and predetermined particles are uniformly mixed, a film 38 which is an ultraviolet ray blocking layer 34 made of polyester into which an ultraviolet ray absorbing agent is uniformly mixed, and an arbitrary layer 39 placed between these films 37 and 38 are layered and attached to each other. The an arbitrary layer 39 is referred to as an arbitrary layer 39 because another film or glass may intervene between the above described films 37 and 38, as long as the ultraviolet ray blocking layer 34 is provided outside the near infrared ray blocking layer 33 relative to the main body of the PDP in the case where the near infrared ray absorbing filter 31 is used for the plasma display panel 41.

In the near infrared ray absorbing filter 31 schematically shown in Fig. 7(b), a biaxially oriented film 37 having two layers, in which a near infrared ray blocking layer 33 and a particle containing layer 36 are layered through integral molding by means of a co-extrusion method, a film 38 which is an ultraviolet ray blocking layer 34 made of polyester into which an ultraviolet ray absorbing agent is uniformly mixed, and an arbitrary layer 39 which is located between the particle containing layer 36 of this film 37 and the film 38 are layered and attached to each other. The near infrared ray blocking layer 33 is made of polyester into which a near infrared ray absorbing agent is uniformly mixed. The particle containing layer 36 is made of polyester into which predetermined particles are uniformly mixed. The ultraviolet ray blocking layer 34 is provided outside the near infrared ray blocking layer 33 relative to the main body of the PDP.

In the near infrared ray absorbing filter 31 schematically shown in Fig. 7(c), a biaxially oriented film 37 having two layers, in which a near infrared ray blocking layer 33 and a particle free layer 40 are layered through integral molding by means of a co-extrusion method, a film 38 which is an ultraviolet ray blocking layer 34 made of polyester into which an ultraviolet ray absorbing agent is uniformly mixed, and an arbitrary layer 39 which is located between the particle free layer 40 of this film 37 and the film 38 are layered and attached to each other. The near infrared ray blocking layer 33 is made of polyester into which a near infrared ray absorbing agent and predetermined particles are uniformly mixed. The particle free layer 40 is made of polyester which does not contain predetermined particles. The ultraviolet ray blocking layer 34 is provided outside the near infrared ray blocking layer 33 relative to the main body of the PDP.

The near infrared ray absorbing filter 31 schematically shown in Fig. 7(d) is gained by changing the particle free layer 40 of the film 37 to a particle containing layer 36 in the near infrared ray absorbing filter 31 shown in Fig. 7 (c) .

In the near infrared ray absorbing filter 31 schematically shown in Fig. 7(e), a biaxially oriented film 37, a film 38 which is an ultraviolet ray blocking layer 34, and an arbitrary layer 39 located between the film 37 and the film 38 are layered and attached to each other. The biaxially oriented film 37 is a film having three layers, or a particle containing layer 36 made of polyester into which predetermined particles are uniformly mixed, a particle free layer 40 made of polyester which does not contain predetermined particles and a near infrared ray blocking layer 33 which is placed between this particle containing layer 36 and the particle free layer 40 and made of polyester into which a near infrared ray absorbing agent is uniformly mixed. These layers 36, 40, and 33 are layered through integral molding by means of a co-extrusion method. The film 38 which is an ultraviolet ray blocking layer 34 is made of polyester into which an ultraviolet ray absorbing agent is uniformly mixed. The ultraviolet ray blocking layer 34 is provided outside the near infrared ray blocking layer 33 relative to the main body of the PDP.

The near infrared ray absorbing filter 31 schematically shown in Fig. 7(f) is gained by changing the particle free layer 40 of the film 37 to a particle containing layer 36 in the near infrared ray absorbing filter 31 shown in Fig. 7(e).

The plasma display panel 41 schematically shown in Fig. 8(a) includes as a number of multilayer bodies a film 42 of a single layer which is a reflection preventing layer, a film 43 of a single layer which is an adhesive agent layer, a glass substrate 44, a film 45 of a single layer which is an adhesive agent layer, a film 46 of a single layer which is an electromagnetic wave blocking layer, a film 47 of a single layer which is an adhesive agent layer containing an image quality correcting agent, and a film 35 which is the same as that in the near infrared ray absorbing filter 31 shown in Fig. 7(e). The above described film 35, film 47, film 46, film 45, glass substrate 44, film 43 and film 42 are aligned and layered in sequence from the main body of the PDP toward the outside.

As the image quality correcting agent, a tetraaza porphyrin compound which absorbs visible light having an absorption maximum wavelength in a range from 560 nm to 600 nm is used, but there are no particular limitations, and other existing compounds which have an absorption maximum wavelength in a range from 560 nm to 600 nm can be used. Cyanine compounds, squarylium compounds, azo compounds and phthalocyanine compounds, for example, can be used.

The plasma display panel 41 schematically shown in Fig. 8(b) includes as a number of multilayer bodies a film 42 of a single layer which is a reflection preventing layer, a film 43 of a single layer which is an adhesive agent layer, a glass substrate 44, a film 45 of a single layer which is an adhesive agent layer, a film 46 of a single layer which is an electromagnetic wave blocking layer, a film 47 of a single layer which is an adhesive agent layer containing an image quality correcting agent and films 37 and 38 which are the same as those in the near infrared ray absorbing filter 31 shown in Fig. 7(g). The above described film 37, film 38, film 47, film 46, film 45, glass substrate 44, film 43 and film 42 are aligned and layered in sequence from the main body of the PDP toward the outside.

### [Examples and Comparative Examples]

Next, the polyester materials used in the following Examples 6 to 9 and Comparative Examples 3 to 5 are described.
A: A polyester material in pellet form of polycondensed ethylene glycol, isophthalic acid and terephthalic acid, including 600 ppm of silica particles having an average particle diameter of 2.2 microns.
AI: A polyester material gained by dry blending polyester A and a near infrared ray absorbing agent (KAYASORB IRG-022, made by Nippon Kayaku Co., Ltd., diimonium salt compound) at 270:1.
AU: A polyester material gained by dry blending a polyester material in pellet form and polyester A at a weight ratio of 1:9, the polyester material being gained by supplying polyester A into a biaxial extruder with a vent and supplying 2,2' - (1,4-phenylene) bis [4h-3,1-benzooxazine-4-on] (CYASORB UV-3638, made by CYTEC Industries Inc., molecular weight: 369, benzooxazinone based substance) as an ultraviolet ray absorbing agent such that the concentration becomes 10 weight % and carrying out melt kneading.
B: A polyester material in pellet form gained by inducing reaction between 184 parts by weight of 1,4-cyclohexane dicarboxylic acid (trans form: 98%), 158 parts by weight of 1,4-cyclohexanedimethanol (trans form: 67%) and 0.9 parts by weight of a butanol solution of 6 weight % of Ti(OC₄H₉)₄ through polycondensation, and extracting the polymer gained after this polycondensation reaction into water in strand form, and after that, blending 0.1 weight % of amorphous silica having an average particle diameter of 2.4 µm in with the gained polyester material in pellet form and extruding the mixture in strand form.
BI: A material gained by dry blending polyester B and a near infrared ray absorbing agent (KAYASORB IRG-022, made by Nippon Kayaku Co., Ltd.) at 270:1.
BU: A polyester material gained by dry blending a polyester material in pellet form and polyester B at a weight ratio of 1:9, the polyester material being gained by supplying polyester B into a biaxial extruder with a vent and supplying 2,2'-(1,4-phenylene) bis[4H-3,1-benzooxazine-4-on] (CYASORB UV-3638, made by CYTEC Industries Inc., molecular weight: 369, benzooxazinone based substance) as an ultraviolet ray absorbing agent such that the concentration becomes 10 weight % and carrying out melt kneading.
C: A general purpose polyester material in pellet form gained from ethylene glycol and terephthalic acid through polycondensation and including 600 ppm of silica particles having an average particle diameter of 2.2 microns.
CI: A polyester material gained by dry blending polyester C and a near infrared ray absorbing agent (KAYASORB IRG-022, made by Nippon Kayaku Co., Ltd.) at 270:1.
CU: A polyester material gained by dry blending a polyester material in pellet form and polyester C at a weight ratio of 1:9, the polyester material being gained by supplying polyester C into a biaxial extruder with a vent and supplying 2,2'-(1,4-phenylene) bis[4H-3,1-benzooxazine-4-on] (CYASORB UV-3638, made by CYTEC Industries Inc., molecular weight: 369, benzooxazinone based substance) as an ultraviolet ray (UV) absorbing agent such that the concentration becomes 10 weight % and carrying out melt kneading.

### [Example 6]

A material gained by dry blending polyester B and a near infrared ray (NIR) absorbing agent (KAYASORB IRG-022, made by Nippon Kayaku Co., Ltd.) at 300:1 was put in an extruder. This extruder carried out melt extrusion when the temperature in the melt line was set to 250°C, such that the melted resin was extruded in sheet form from a T die. This melted resin in sheet form was cast on a cooling drum at 20°C. At this time of casting, an electrostatic applying contact method was used. The thus manufactured unexpanded sheet was guided to a process for longitudinal expansion. In this process for longitudinal expansion, a roll expansion method was used, and a sheet was preheated to 70°C using a number of ceramic rolls, and an IR heater was also used, such that the sheet was expanded in the longitudinal direction with an expansion ratio of 3.0. Next, this uniaxially expanded film was guided to a tenter and preheated to 90°C, and after that, expanded in the direction of the width with an expansion ratio of 4.0. After that, the film was tensed and thermally stabilized at a temperature of 180°C in the same tenter, and then, a slacking process was carried out at a temperature of 150°C such that the film was slacked by 3% in the direction of the width, and thus, a biaxially oriented polyester film (NIR) having a thickness of 25 µm was gained. This film was used as the second layer.

Next, polyester BU was put in an extruding machine, and thus, a film was manufactured using the same technique for the biaxially polyester film (NIR), so that a biaxially oriented polyester film (UV) having a thickness of 25 µm was gained. This film was used as the first layer.

Subsequently, SKdyne 2094, made by Soken Chemical Engineering Co., Ltd., and curing agent E-AX, made by the same company, were mixed with a ratio of 1000:2.7, and a solution (toluene : ethyl acetate = 1:1) of this with a solid concentration of 20% was gained, and after that, this was left still so that the solvent was degassed, and then, an adhesive layer was formed on the surface of the biaxially oriented polyester film (UV) by applying this solution of the mixture in accordance with a bar coating method using a #24 bar. This adhesive layer was dried for three minutes at 100°C, and after that, the surface was attached to the biaxially oriented polyester film (NIR) and pressure was applied using a hand roller so as to remove air bubbles, so that a transparent multilayer biaxially expanded polyester film was gained.

The average transmittance (*1) of visible light having a wavelength of 380 nm to 780 nm, ultraviolet rays having a wavelength of 370 nm and near infrared rays having a wavelength of 820 nm to 1100 nm was measured for the gained film using a spectrophotometer UV3100, made by Shimadzu Corporation, with a low scanning speed and a sampling pitch of 1 nm. The transmittance (*2) of near infrared rays was measured after the film was placed inside a window facing south in the laboratory and exposed to solar light for two months.

In addition, the uniformity in the appearance (*3) of the gained film was evaluated by the eye, by examining the state on the surface, after lightly pressing cotton soaked with toluene against the surface of the first layer using the fingertips and making a rubbing motion five times. The results of the evaluation are shown in Table 2.

### [Example 7]

A polyester material AI was put in the first extruder 21 of the co-extruder shown in Fig. 5, and a polyester material AU was put in the second extruder 22. These extruders 21 and 22 carried out melt extrusion when the temperature in the melt line was set to 230°C, and the flow paths of these merged immediately before this melt extrusion, such that the ratio in the thickness of AI/AU became 4/1, and the melted resin was coextruded in sheet form from a T die 23. This melted resin in sheet form was cast on a cooling drum 24 at 20°C. At this time of casting, an electrostatic applying contact method was used. The thus manufactured unexpanded sheet was guided to a longitudinal expanding machine 25. In this longitudinal expanding machine 25, a roll expanding method was used, and the sheet was preheated to 70°C using a number of ceramic rolls, and an IR neater was also used, and thus, the sheet was expanded in the longitudinal direction with an expansion ratio of 3.0.

Next, this uniaxially expanded film was guided to a tenter and preheated to 90°C, and after that, guided to a lateral expanding machine 26 and expanded in the direction of the width with an expansion ratio of 4.0. After that, the sheet was tensed and thermally stabilized at a temperature of 180°C within the same tenter, and after that, a slacking process was carried out at a temperature of 150°C such that the sheet was slacked in the direction of the width by 3%, and thus, a biaxially oriented polyester film having a thickness of 25 µm was gained.

As shown in Table 2, the first layer of the gained film was made of polyester AU and the second layer was made of polyester AI. This film was evaluated in the same manner as that in Example 6. The results are shown in Table 2.

**[Table2]**

| | Example 6 | Example 7 | Example 8 | Example 9 | Comparative Example 3 | Comparative Example 4 | Comparative Example 5 |
|---|---|---|---|---|---|---|---|
| Melting point of film (°C) | 220 | 206 | 220 | 253 | 220 | - | - |
| First layer | BU + adhesive layer | AU | BU | CU | BI | Acryl binder + near infrared ray absorbing agent | Acryl binder + ultraviolet ray absorbing agent |
| Second layer | BI | AI | BI | CI | None | Polyester film | Acryl binder + near infrared ray absorbing agent |
| Third layer | None | None | None | None | None | None | Polyester film |
| Number of processes for attaching | 1 | 0 | 0 | 0 | 0 | 1 | 2 |
| Average transmittance of visible light having wavelength of 380 nm to 780 nm (%) *1 | 74 | 75 | 74 | 72 | 74 | 73 | 73 |
| Transmittance of ultraviolet ray of 370 nm (%) *1 | 0.01 | 0.01 | 0.01 | 0.01 | 86 | 85 | 0.01 |
| Average transmittance of near infrared rays having wavelength of 820 nm to 1100 nm (%) *1 | 9.5 | 9.2 | 9.5 | 15 | 9.5 | 8.4 | 8.3 |
| Average transmittance of near infrared rays having wavelength of 820 nm to 1100 nm after test of exposure to solar light (%) *1 *2 | 9.9 | 9.5 | 9.9 | 16 | 28 | 22 | 8.7 |
| Uniformity in appearance *3 | Excellent; no roughness on surface | Excellent; no roughness on surface | Excellent; no roughness on surface | Excellent; no roughness on surface | Excellent; no roughness on surface | Poor; partial roughness on surface observed | Poor; partial roughness on surface observed |

### [Example 8]

A polyester material BI was put in the first extruder 21 shown in Fig. 5, and a polyester material BU was put in the second extruder 22. In addition to these changes, and the temperature in the melt line was changed to 250°C. Apart from these points, the film was formed in the same manner as that in Example 6, such that a biaxially oriented polyester film having a thickness of 25 µm was gained.

As shown in Table 2, the first layer of the gained film was made of polyester BU and the second layer was made of polyester BI. This film was evaluated in the same manner as that in Example 6. The results are shown in Table 2.

### [Example 9]

In Example 9, the polyester material BI in the above described Example 6 was changed to a polyester material CI (melting point: 253°C), the polyester material BU was changed to a polyester material CU (melting point: 253°C), and the temperature in the melt line was changed to 290°C. Apart from these points, the film was formed in the same manner as that in Example 6, such that a biaxially oriented polyester film having a thickness of 25 µm was gained.

As shown in Table 2, the first layer of the gained film was made of polyester CU and the second layer was made of polyester CI. This film was evaluated in the same manner as that in Example 6. The results are shown in Table 2.

### Comparative Example 3

The polyester B (melting point : 220°C) before extrusion molding was a polyester material in pellet form gained by inducing a polycondensation reaction between 184 parts by weight of 1,4-cyclohexane dicarboxylic acid (trans form: 98%), 158 parts by weight of 1,4-cyclohexanedimethanol (trans form: 67%) and 0.9 parts by weight of a butanol solution of 6 weight % Ti(OC₄H₉)₄, extracting the polymer gained after this polycondensation reaction in strand form into water such that a material in pellet form was gained, blending amorphous silica having an average particle diameter of 2.4 µm into this material in pellet form such that the amorphous silica become 0.1 weight %, and extruding the material in strand form. A material BI gained by dry blending this polyester B and a near infrared ray absorbing agent (KAYASORB IRG-022, made by Nippon Kayaku Co., Ltd.) at 270:1 was put in an extruder.

The extruder carried out melt extrusion when the temperature in the melt line was set at 250°C, such that the melted resin was extruded in sheet form from a T die. This melted resin in sheet form was cast on a cooling drum at 20°C. At this time of casting, an electrostatic applying contact method was used. The thus manufactured unexpanded sheet was guided to a longitudinal expansion process. In the longitudinal expansion process, a roll expansion method was used, and the sheet was preheated to 70°C using a number of ceramic rolls, and an IR heater was also used, and thus, the sheet was expanded in the longitudinal direction with an expansion ratio of 3.0. Next, the uniaxially expanded film was guided to a tenter and preheated to 90°C, and after that, expanded in the direction of the width with an expansion ratio of 4.0. After that, the film was tensed and thermally stabilized at a temperature of 180°C within the same tenter, and after that, a slacking process was carried out at a temperature of 150°C such that the film was slacked in the direction of the width by 3%, and thus, a biaxially oriented polyester film having a thickness of 25 µm was gained.

As shown in Table 2, the first layer of the gained film was made of polyester BI. This film was evaluated in the same manner as that in Example 6. The results are shown in Table 2.

### Comparative Example 4

0.2 g of a near infrared ray absorbing agent (KAYASORB IRG-022, made by Nippon Kayaku Co., Ltd.) and 5.0 g of a polymethylmethacrylate resin (Dianal BR-80) made by Mitsubishi Rayon Co., Ltd. were dissolved in a mixed solvent of 4.0 g of methyl ethyl ketone and 16.0 g of toluene. 1.5 g of the gained liquid was taken as a sample and completely dissolved using an ultrasonic cleaning machine, and the gained solution was applied to a biaxially oriented film (0300, thickness: 25 µm) made by Mitsubishi Polyester Film Corporation using a #24 bar coater and dried, such that a near infrared ray absorbing film was gained. The thickness of the applied film was approximately 6 µm.

As shown in Table 2, the first layer of the gained film was made of an acryl binder and a near infrared ray absorbing agent, and the second layer was made of a polyester film. This film was evaluated in the same manner as that in Example 6. The results are shown in Table 2.

### comparative Example 5

0.35 g of an ultraviolet ray absorbing agent (CYASORB UV-3638, made by CYTEC Industries Inc.) and 5.0 g of a polymethylmethacrylate resin (Dianal BR-80) made by Mitsubishi Rayon Co., Ltd. were dissolved in a mixed solvent of 4.0 g of methyl ethyl ketone and 16.0 g of toluene. 1.5 g of the gained liquid was taken as a sample and completely dissolved using an ultrasonic cleaning machine, and after that, the gained solution was applied to the near infrared ray absorbing film gained in Comparative Example 4 using a #24 bar coater and dried, so that a multilayer film of an ultraviolet ray absorbing layer and an infrared ray absorbing layer was gained.

As shown in Table 2, the first layer of the gained film was made of an acryl binder and an ultraviolet ray absorbing agent, the second layer was made of an acryl binder and a near infrared ray absorbing agent, and the third layer was made of a polyester film. This film was evaluated in the same manner as that in Example 6. The results are shown in Table 2.

As is clear from Table 2, when one independent near infrared ray absorbing filter has an ultraviolet ray blocking function itself, the near infrared ray absorbing agent is prevented from deteriorating (decomposing or changing in quality), and it can be seen that after the test of exposure to solar light, the average transmittance of near infrared rays having a wavelength of 820 nm to 1100 nm was kept low in Examples 6 to 9. In addition, in Examples 6 to 9, the number of steps for attachment between respective layers can be reduced according to the co-extrusion method. In addition, in Example 6, in which the number of steps is one, it can be seen that the uniformity in the appearance was secured even when a near infrared ray blocking layer and an ultraviolet ray blocking layer were layered. Furthermore, it can be seen that in the respective examples, the difference in the transmittance between near infrared rays and visible light could be made great by using polyester or which the melting point is no higher than 230°C.

Next, additional embodiments and examples of the present invention are described in reference to the drawings.

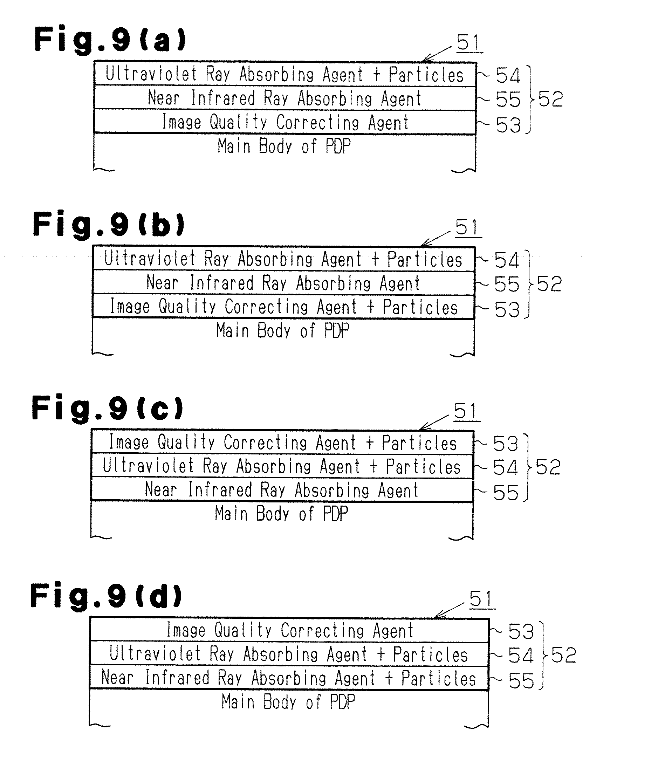

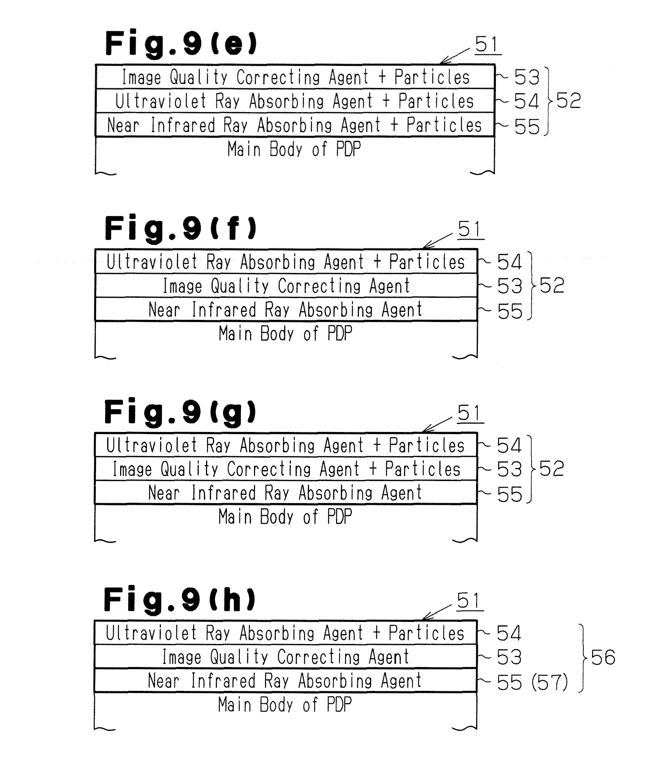

The optical filter for a plasma display 51 schematically shown in Fig. 9(a) is a biaxially oriented film 52 having three layers, or an image quality correcting layer 53, an ultraviolet ray blocking layer 54 and a near infrared ray blocking layer 55 are layered through integral molding by means of a co-extrusion method. The image quality correcting layer 53 is made of polyester into which an image quality correcting agent is uniformly mixed. The ultraviolet ray blocking layer 54 is made of polyester into which an ultraviolet ray absorbing agent and predetermined particles are uniformly mixed. The near infrared ray blocking layer 55 is placed between the image quality correcting layer 53 and the ultraviolet ray blocking layer 54 and made of polyester into which a near infrared ray absorbing agent is uniformly mixed.

In the case where this optical filter 51 is used in a plasma display panel 61, the ultraviolet ray blocking layer 54 is provided outside the near infrared ray blocking layer 55 relative to the main body of the plasma display panel (PDP). Though as the image quality correcting agent, a tetraaza porphyrin compound which absorbs visible light having an absorption maximum wavelength in a range from 560 nm to 600 nm is used, there are no particular limitations, and other existing compounds which have an absorption maximum wavelength in a range from 560 nm to 600 nm may be used. For example, cyanine compounds, squarylium compounds, azo compounds and phthalocyanine compounds can be used.

Though as the ultraviolet ray absorbing agent, a benzooxazinone compound is used, other existing organic and inorganic compounds which have a maximum absorption in a range from 300 nm to 400 nm and efficiently block light in this range can be used without any particular limitations. As examples of organic ultraviolet ray absorbing agents, benzotriazole based agents, benzophenone based agents, salicylate ester based agents, triazine based agents, paraaminobenzoate based agents, cinnamate based agents, acrylate based agents, hindered amine based agents and cyclic imino ester based agents can be cited. As the inorganic ultraviolet ray absorbing agent, a titanium oxide based agent, a zinc oxide based agent or a micro particle iron oxide based agent can be used.

Though as the above described predetermined particles, silica particles having a diameter of several µm are used, other existing particles, for example calcium carbonate particles, may be used. These predetermined particles are exposed from at least one surface from among the two surfaces of the polyester film so that adhesion is reduced in a state where the polyester film is rolled up, making sliding easy.

Though as the near infrared ray absorbing agent, a diimonium salt compound is used, other existing compounds which have an absorption maximum wavelength in a range from 800 nm to 1100 nm can be used without any particular limitations. For example, phthalocyanine compounds, naphthalocyanine compounds indoaniline compounds, benzopyran compounds, quinoline compounds, anthraquinone compounds, squarylium compounds, nickel complex compounds, copper compounds, tungsten compounds, indium tin oxide, antimony tin oxide, ytterbium phosphate and mixtures of these can be used.

The melting point of polyester at the time of extrusion molding is set no higher than 230°C.

The optical filter for a plasma display 51 schematically shown in Fig. 9(b) is a biaxially oriented film 52 having three layers, or an image quality correcting layer 53, an ultraviolet ray blocking layer 54 and a near infrared ray blocking layer 55. These layers 53, 54, and 55 are layered through integral molding by means of a co-extrusion method. The image quality correcting layer 53 is made of polyester into which an image quality correcting agent and predetermined particles are uniformly mixed. The ultraviolet ray blocking layer 54 is made of polyester into which an ultraviolet ray absorbing agent and predetermined particles are uniformly mixed. The near infrared ray blocking layer 55 is placed between the image quality correcting layer 53 and the ultraviolet ray blocking layer 54 and made of polyester into which a near infrared ray absorbing agent is uniformly mixed. The ultraviolet ray blocking layer 54 is provided outside the near infrared ray blocking layer 55 relative to the main body of the PDP.

The optical filter for a plasma display 51 schematically shown in Fig. 9(c) is a biaxially oriented film 52 having three layers, or an image quality correcting layer 53 made of polyester into which an image quality correcting agent and predetermined particles are uniformly mixed, a near infrared ray blocking layer 55 made of polyester into which a near infrared ray absorbing agent is uniformly mixed, and an ultraviolet ray blocking layer 54 which is placed between the image quality correcting layer 53 and the near infrared ray blocking layer 55 and made of polyester into which an ultraviolet ray absorbing agent and predetermined particles are uniformly mixed. These layers 53, 55, and 54 are layered through integral molding by means of a co-extrusion method. The ultraviolet ray blocking layer 54 is provided outside the near infrared ray blocking layer 55 relative to the main body of the PDP.

The optical filter for a plasma display 51 schematically shown in Fig. 9(d) is a biaxially oriented film 52 having three layers, or an image quality correcting layer 53 made of polyester into which an image quality correcting agent - is uniformly mixed, a near infrared ray blocking layer 55 made of polyester into which a near infrared ray absorbing agent and predetermined particles are uniformly mixed, and an ultraviolet ray blocking layer 54 which is placed between the image quality correcting layer 53 and the near infrared ray blocking layer 55 and made of polyester into which an ultraviolet ray absorbing agent and predetermined particles are uniformly mixed. These layers 53, 55, and 54 are layered through integral molding by means of a co-extrusion method. The ultraviolet ray blocking layer 54 is provided outside the near infrared ray blocking layer 55 relative to the main body of the PDP.

The optical filter for a plasma display 51 schematically shown in Fig. 9(e) is a biaxially oriented film 52 having three layers, or an image quality correcting layer 53 made of polyester into which an image quality correcting agent and predetermined particles are uniformly mixed, a near infrared ray blocking layer 55 made of polyester into which a near infrared ray absorbing agent and predetermined particles are uniformly mixed, and an ultraviolet ray blocking layer 54 which is placed between the image quality correcting layer 53 and the near infrared ray blocking layer 55 and made of polyester into which an ultraviolet ray absorbing agent and predetermined particles are uniformly mixed. These layers 53, 55, and 54 are layered through integral molding by means of a co-extrusion method. The ultraviolet ray blocking layer 54 is provided outside the near infrared ray blocking layer 55 relative to the main body of the PDP.

The optical filter for a plasma display 51 schematically shown in Fig. 9(f) is a biaxially oriented film 52 having three layers, or an ultraviolet ray blocking layer 54 made of polyester into which an ultraviolet ray absorbing agent and predetermined particles are uniformly mixed, a near infrared ray blocking layer 55 made of polyester into which a near infrared ray absorbing agent is uniformly mixed, and an image quality correcting layer 53 which is placed between the ultraviolet ray blocking layer 54 and the near infrared ray blocking layer 55 and made of polyester into which an image quality correcting agent is uniformly mixed. These layers 54, 55, and 53 are layered through integral molding by means of a co-extrusion method. The ultraviolet ray blocking layer 54 is provided outside the near infrared ray blocking layer 55 relative to the main body of the PDP.

The optical filter for a plasma display 51 schematically shown in Fig. 9(g) is a biaxially oriented film 52 having three layers, or an ultraviolet ray blocking layer 54 made of polyester into which an ultraviolet ray absorbing agent and predetermined particles are uniformly mixed, a near infrared ray blocking layer 55 made of polyester into which a near infrared ray absorbing agent is uniformly mixed, and an image quality correcting layer 53 which is placed between the ultraviolet ray blocking layer 54 and the near infrared ray blocking layer 55 and made of polyester into which an image quality correcting agent and predetermined particles are uniformly mixed. These layers 54, 55, and 53 are layered through integral molding by means of a co-extrusion method. The ultraviolet ray blocking layer 54 is provided outside the near infrared ray blocking layer 55 relative to the main body of the PDP.

In the optical filter for a plasma display 51 schematically shown in Fig. 9(h), a film 57 is layered on and attached to a biaxially oriented film 56. The biaxially oriented film 56 is a film having two layers, or an ultraviolet ray blocking layer 54 made of polyester into which an ultraviolet ray absorbing agent and predetermined particles are uniformly mixed, and an image quality correcting layer 53 made of polyester into which an image quality correcting agent is uniformly mixed. These layers 54 and 53 are layered through integral molding by means of a co-extrusion method. The film 57 is a near infrared ray blocking layer 55 made of polyester into which a near infrared ray absorbing agent is uniformly mixed. The infrared ray blocking layer 54 is provided outside the near infrared ray blocking layer 55 relative to the main body of the PDP.

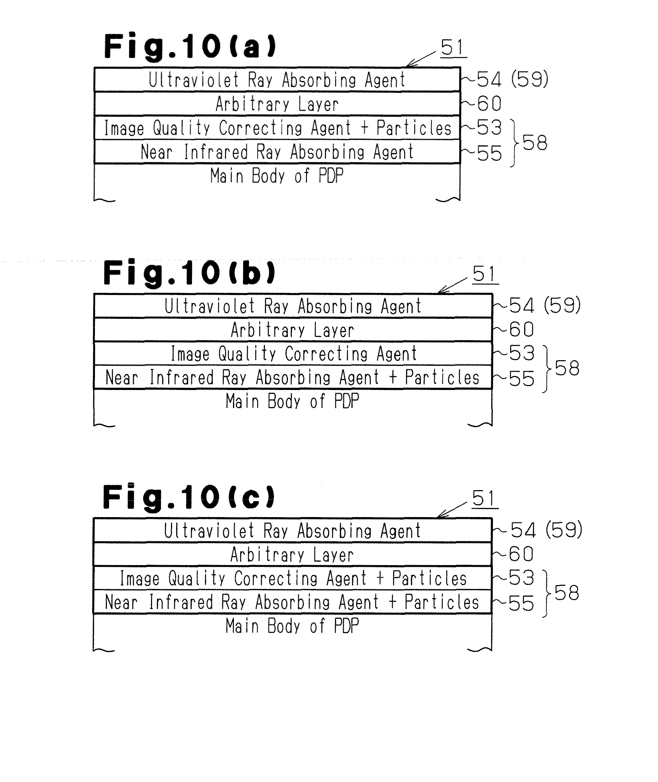

In the optical filter for a plasma display 51 schematically shown in Fig. 10(a), a biaxially oriented film 58, a film 59 and an arbitrary layer 60 located between the image quality correcting layer 53 of the biaxially oriented film 58 and the film 59 are layered and attached to each other. The biaxially oriented film 58 is a film having two layers, or an image quality correcting layer 53 made of polyester into which an image quality correcting agent and predetermined particles are uniformly mixed, and a near infrared ray blocking layer 55 made of polyester into which a near infrared ray absorbing agent is uniformly mixed. These layers 53 and 55 are layered through integral molding by means of a co-extrusion method. The film 59 is an ultraviolet ray blocking layer 54 made of polyester into which an ultraviolet ray absorbing agent is uniformly mixed.

The arbitrary layer 60 is referred to as "arbitrary" because a film glass or the like may intervene between the film 58 and the film 59, as long as the ultraviolet ray blocking layer 54 is provided outside the near infrared ray blocking layer 55 relative to the main body of the PDP in the case where the near infrared ray absorbing filter 51 is used in the plasma display panel 61.

In the optical filter for a plasma display 51 schematically shown in Fig. 10 (b), a biaxially oriented film 58, a film 59 and an arbitrary layer 60 which is located between the image quality correcting layer 53 of the biaxially oriented film 58 and the film 59 are layered and attached to each other. The biaxially oriented film 58 is a film having two layers, or an image quality correcting layer 53 made of polyester into which an image quality correcting agent is uniformly mixed, and a near infrared ray blocking layer 55 made of polyester into which a near infrared ray absorbing agent and predetermined particles are uniformly mixed. These layers 53 and 55 are layered through integral molding by means of a co-extrusion method. The film 59 is an ultraviolet ray blocking layer 54 made of polyester into which an ultraviolet ray absorbing agent is uniformly mixed. The ultraviolet ray blocking layer 54 is provided outside the near infrared ray blocking layer 55 relative to the main body of the PDP.

In the optical filter for a plasma display 51 schematically shown in Fig. 10(c), a biaxially oriented film 58, a film 59 and an arbitrary layer 60 which is located between the image quality correcting layer 53 of the biaxially oriented film 58 and the film 59 are layered and attached to each other. The biaxially oriented film 58 is a film having two layers, or an image quality correcting layer 53 made of polyester into which an image quality correcting agent and predetermined particles are uniformly mixed, and a near infrared ray blocking layer 55 made of polyester into which a near infrared ray absorbing agent and predetermined particles are uniformly mixed. These layers 53 and 55 are layered through integral molding by means of a co-extrusion method. The film 59 is an ultraviolet ray blocking layer 54 made of polyester into which an ultraviolet ray absorbing agent is uniformly mixed. The ultraviolet ray blocking layer 54 is provided outside the near infrared ray blocking layer 55 relative to the main body of the PDP.

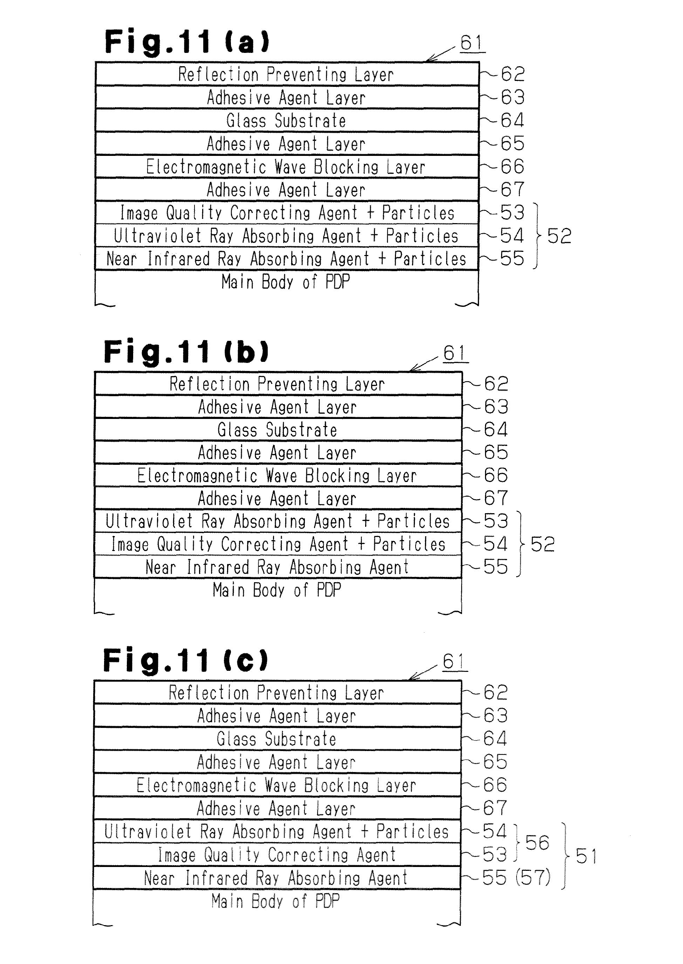

The plasma display panel 61 schematically shown in Fig. 11 (a) includes a film 62 of a single layer which is a reflection preventing layer, a film 63 of a single layer which is an adhesive agent layer, a glass substrate 64, a film 65 of a single layer which is an adhesive agent layer, a film 66 of a single layer which is an electromagnetic wave blocking layer and a film 67 of a single layer which is an adhesive agent layer, and also includes a film 52 which is the same as that in the optical filter for a plasma display 51 schematically shown in Fig. 9(e). The above described film 52, film 67, film 66, film 65, glass substrate 64, film 63 and film 62 are aligned and layered in sequence starting from the main body of the PDP.

The plasma display panel 61 schematically shown in Fig. 11(b) includes a film 62 of a single layer which is a reflection preventing layer, a film 63 of a single layer which is an adhesive agent layer, a glass substrate 64, a film 65 of a single layer which is an adhesive agent layer, a film 66 of a single layer which is an electromagnetic wave blocking layer and a film 67 of a single layer which is an adhesive agent layer, and also includes a film 52 which is the same as that in the optical filter for a plasma display 51 shown in Fig. 9(c), The above described film 52, film 67, film 66, film 65, glass substrate 64, film 63 and film 62 are aligned and layered in sequence starting from the main body of the PDP.

The plasma display panel 61 schematically shown in Fig. 11(c) includes a film 62 of a single layer which is a reflection preventing layer, a film 63 of a single layer which is an adhesive agent layer, a glass substrate 64, a film 65 of a single layer which is an adhesive agent layer, a film 66 of a single layer which is an electromagnetic wave blocking layer and a film 67 of a single layer which is an adhesive agent layer, and also includes films 56 and 57 which are the same as those in the optical filter for a plasma display 51 shown in Fig. 9(h). The above described film 57, film 56, film 67, film 66, film 65, glass substrate 64, film 63 and film 62 are aligned and layered in sequence starting from the main body of the PDP.

### [Examples and Comparative Examples]

Next, the polyester materials used in the following Examples 10 to 15 and Comparative Example 6 are described.
A: A polyester material in pellet form of polycondensed ethylene glycol, isophthalic acid and terephthalic acid, including 600 ppm of silica particles having an average particle diameter of 2.2 microns. Melting point: 206°C.
AI: A polyester material gained by dry blending polyester A and a near infrared ray absorbing agent (KAYASORB IRG-022, made by Nippon Kayaku Co., Ltd., at 270:1.
AU: A polyester material gained by dry blending a polyester material in pellet form and polyester A at a weight ratio of 1:9, the polyester material being gained by supplying polyester A into a biaxial extruder with a vent and supplying 2,2° - (1, 4-phenylene) bis [4H-3,1-benzooxazine-4-on] (CYASORB UV-3638, made by CYTEC Industries Inc., molecular weight: 369, benzooxazinone based substance) as an ultraviolet ray absorbing agent such that the concentration becomes 10 weight % and carrying out melt kneading.
AS: A polyester material gained by dry blending polyester A and an image quality correcting agent (TAP-2; tetraaza porphyrin compound made by Yamada Chemical Co., Ltd.) which absorbs visible light having an absorption maximum wavelength in a range from 560 nm to 600 nm at 12000:1.
B: A polyester material in pellet form gained by inducing reaction between 184 parts by weight of 1,4-cyclohexane dicarboxylic acid (trans form: 98%), 158 parts by weight of 1, 4-cyclohexanedimethanol (trans form: 67%) and 0.9 parts by weight of a butanol solution of 6 weight % of Ti(OC₄H₉)₄ through polycondensation, and extracting the polymer gained after this polycondensation reaction into water in strand form, and after that, blending 0.1 weight % of amorphous silica having an average particle diameter of 2.4 µm in with the gained polyester material in pellet form and extruding the mixture in strand form. Melting point: 220°C.
BI: A material gained by dry blending polyester B and a near infrared ray absorbing agent (KAYASORB IRG-022, made by Nippon Kayaku Co., Ltd.) at 270:1.
BU: A polyester material gained by dry blending a polyester material in pellet form and polyester B at a weight ratio of 1:9, the polyester material being gained by supplying polyester B into a biaxial extruder with a vent and supplying 2 ,2'- (1,4-phenylene) bis [4H-3,1-benzooxazine-4-on] (CYASORB UV-3638, made by CYTEC Industries Inc., molecular weight : 369, benzooxazinone based substance) as an ultraviolet ray absorbing agent such that the concentration becomes 10 weight % and carrying out melt kneading.
BS: A polyester material gained by dry blending polyester B and an image quality correcting agent (TAP-2; tetraaza porphyrin compound made by Yamada Chemical Co., Ltd.) which absorbs visible light having an absorption maximum wavelength in a range from 560 nm to 600 nm at 12000:1.
C : A general purpose polyester material in pellet form gained from ethylene glycol and terephthalic acid through poly-condensation and including 600 ppm of silica particles having an average particle diameter of 2.2 microns. Melting point : 253°C.
CI : A polyester material gained by dry blending polyester C and a near infrared ray absorbing agent (KAYASORB IRG-022, made by Nippon Kayaku Co., Ltd.) at 270:1.
CU: A polyester material gained by dry blending a polyester material in pellet form and polyester C at a weight ratio of 1:9, the polyester material being gained by supplying polyester C into a biaxial extruder with a vent and supplying 2,2'-(1,4-phenylene) bis[4H-3,1-benzooxazine-4-on] (CYASORB UV-3638, made by CYTEC Industries Inc., molecular weight: 369, benzooxazinone based substance) as an ultraviolet ray absorbing agent such that the concentration becomes 10 weight % and carrying out melt kneading.
CS: A polyester material gained by dry blending polyester C and an image quality correcting agent (TAP-2; tetraaza porphyrin compound made by Yamada Chemical Co., Ltd.) which absorbs visible light having an absorption maximum wavelength in a range from 560 nm to 600 nm at 12000:1 .

### [Example 10]

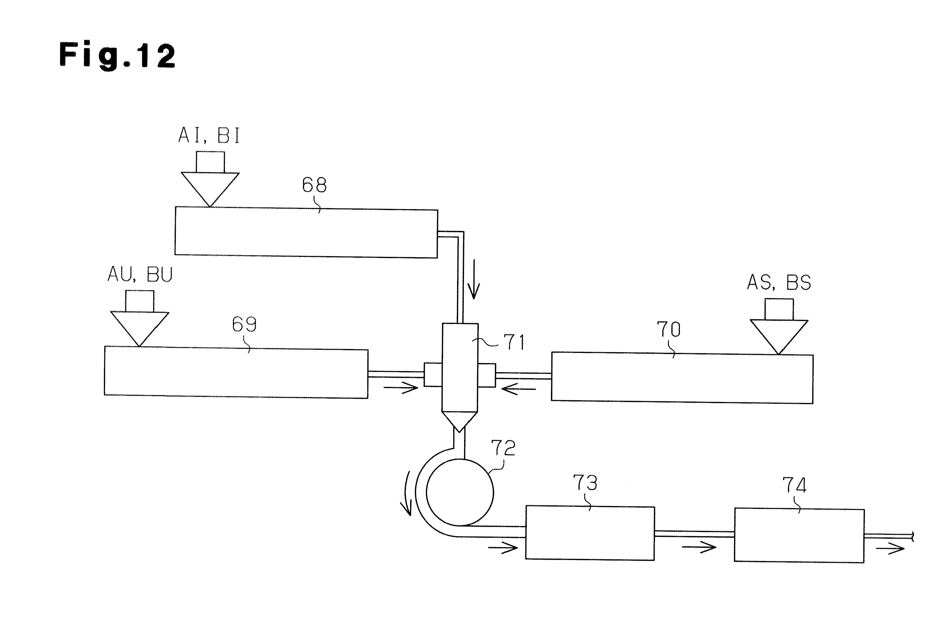

The polyester material AU was put in the first extruder 68 of the co-extruder shown in Fig. 12, the polyester material AI was put in the second extruder 69, and the polyester material AS was put in the third extruder 70. These extruders 68, 69 and 70 carried out melt extrusion when the temperature in the melt line was set to 230°C, and the flow paths of these merged immediately before the melt extrusion such that the ratio in the thickness of the AU layer, the AI layer and the AS layer became 1/4/4, and thus, the melted resin was coextruded in sheet form from a T die 71. The AU layer, the AI layer and the AS layer correspond to the first to third layers in Table 3.

This melted resin in sheet form was cast on a cooling drum 72 at 20°C. At this time of casting, an electrostatic applying contact method was used. The thus manufactured unexpanded sheet was guided to a longitudinal expanding machine 73. In this longitudinal expanding machine 73, a roll expansion method was used, and the sheet was preheated to 70°C using a number of ceramic rolls, and an IR heater was also used, and thus, the sheet was expanded in the longitudinal direction with an expansion ratio of 3.0. Next, this uniaxially expanded film was guided to a tenter and preheated at 90°C, and after that, guided to a lateral expanding machine 74 and expanded in the direction of the width with an expansion ratio of 4.0. After that, the sheet was tensed and thermofixed at a temperature of 180°C within the same tenter, and after that, a slacking process was carried out at a temperature of 150°C such that the sheet was slacked in the direction of the width by 3%, and thus, a biaxially oriented polyester film having a thickness of 45 µm was gained.

The average transmittance (*1) of visible light having a wavelength of 380 nm to 780 nm and near infrared rays having a wavelength of 820 nm to 1100 nm was measured for the gained film using a spectrometer UV3100, made by Shimadzu Corporation, with a low scanning speed and a sampling pitch of 1 nm. The transmittance (*2) of near infrared rays was measured after the film was placed inside a window facing south in the laboratory and exposed to solar light for two months.

In addition, the uniformity in the appearance (*3) of the gained film was evaluated by the eye, by examining the state on the surface, after lightly pressing cotton soaked with toluene against the surface of the first layer using the fingertips and making a rubbing motion five times. The properties of this film are shown in Table 3.

### [Example 11]

In Example 11, the polyester material AU of Example 10 was changed to BU, the polyester material AI was changed to BI and the polyester material AS was changed to BS, and in addition, the temperature in the melt line was changed to 250°C. Apart from this, the film was manufactured in the same manner as in Example 10, and thus, a biaxially oriented polyester film having a thickness of 45 µm was gained. This film was evaluated in the same manner as in Example 10. The properties thereof are shown in Table 3.

### [Example 12]

In Example 12, the polyester material AU of Example 10 was changed to CU, the polyester material AI was changed to CI and the polyester material AS was changed to CS, and in addition, the temperature in the melt line was changed to 29°C. Apart from this, the film was manufactured in the same manner as in Example 10, and thus, a biaxially oriented polyester film having a thickness of 45 µm was gained. This film was evaluated in the same manner as in Example 10. The properties thereof are shown in Table 3.

### [Example 13]

In example 13, a material by dry blending polyester B and a near infrared ray absorbing agent (KAYASORB IRG-022, made by Nippon Kayaku Co., Ltd.) at 300:1 was put in an extruder. This extruder carried out melt extrusion when the temperature in the melt line was set to 250°C, and extruded the melted resin in sheet form from a T die. This melted resin in sheet form was cast on a cooling drum at 20°C. At this time of casting, an electrostatic applying contact method was used. The thus manufactured unexpanded sheet was guided to a longitudinal expansion process. In this longitudinal expansion process, a roll expanding method was used, and the sheet was preheated to 70°C using a number of ceramic rolls, and an IR heater was also used, and thus, the sheet was expanded in the longitudinal direction with an expansion ratio of 3.0.

Next, this uniaxially expanded film was guided to a tenter and preheated at 90°C, and after that, expanded in the direction of the width with an expansion ratio of 4.0. After that, the film was tensed and thermofixed at a temperature of 180°C within the same tenter, and then, a slacking process was carried out at a temperature of 150°C such that the film was slacked in the direction of the width by 3%, and thus, a biaxially oriented polyester film (NIR) having a thickness of 25 µm was gained. This film (NIR) corresponds to BI in the second layer in Table 3.

Next, a film Was manufactured from polyester BU using the same technique as for the biaxially oriented polyester film (NIR) such that a biaxially oriented polyester film (UV) having a thickness of 25 µm was gained. This film (UV) corresponds to BU in the first layer in Table 3.

Furthermore, a film was manufactured from polyester BS using the same technique as for the biaxially oriented polyester film (NIR) so that a biaxially oriented polyester film (VIS) having a thickness of 25 µm was gained. This film (VIS) corresponds to BS in the third layer in Table 3.

Subsequently, SK-Dyne 2094, made by Soken Chemical & Engineering Co., Ltd., and curing agent E-AX, made by the same company, were mixed with a ratio of 1000:2.7, and a solution (toluene : ethyl acetate = 1:1) of this with a solid concentration of 20% was gained, and after that, this was left still so that the solvent was removed through evaporation, and then, this solution of the mixture was applied to the surface of the biaxially oriented polyester film (UV), which is the first layer, in accordance with a bar coating method using a #24 bar, and dried for one minute at 100°C, and after that, the surface was attached to the biaxially oriented polyester film (NIR), which is the second layer, and pressure was applied using a hand roller so as to remove air bubbles, so that a transparent multilayer biaxially expanded polyester film was gained.

Furthermore, an adhesive layer made of SK-Dyne, made by Soken Chemical & Engineering Co., Ltd., was formed on the surface of the biaxially oriented polyester film (VIS), which is the third layer, in accordance with the same technique, and after that, the films of the first and second layers were attached to this so that a multilayer biaxially expanded polyester film having three layers was gained.

This film was evaluated in the same manner as that in Example 10. The properties thereof are shown in Table 3.

### [Example 14]

The polyester material BU was put in the first extruder 68 and the polyester material BS was put in the second extruder 69. These extruders 68 and 69 carried out melt extrusion when the temperature in the melt line was set to 250°C, and the flow paths of these merged immediately before the melt extrusion such that the ratio in the thickness of BU/BS became 1/4, and thus, the melted resin was coextruded in sheet form from a T die 71. This melted resin in sheet form was cast on a cooling drum 72 at 20°C. At this time of casting, an electrostatic applying contact method was used. The thus manufactured unexpanded sheet was guided to a longitudinal expanding machine 73. In this longitudinal expanding machine 73, a roll expanding method was used, and the sheet was preheated to 70°C using a number of ceramic rolls, and an IR heater was also used, and thus, the sheet was expanded in the longitudinal direction with an expansion ratio of 3.0. Next, this uniaxially expanded film was guided to a tenter and preheated at 90°C, and after that, guided to a lateral expanding machine 74 and expanded in the direction of the width with an expansion ratio of 4.0. After that, the film was tensed and thermofixed at a temperature of 180°C within the same tenter, and then, a slacking process was carried out at a temperature of 150°C such that the film was slacked in the direction of the width by 3%, and thus, a biaxially oriented polyester film having a thickness of 25 µm was gained. In the gained film, the first and second layers were attached together.

Next, the same film as the biaxially oriented polyester film (NIR) having a thickness of 25 µm in the second layer described in Example 13 was fabricated and SK-Dyne 2094, made by Soken chemical & Engineering Co., Ltd., and a curing agent E-AX, made by the same company, were applied to the surface of this film in the same procedure as in Example 13 and then dried for one minute at 100°C, and thus, a film for the third layer was gained. The adhesive layer of this film was attached to the biaxially oriented polyester film (NIR), which is the second layer, and pressure was applied using a hand roller so that air bubbles were removed, and thus, a transparent multilayer biaxially expanded polyester film was gained. This film was evaluated in the same manner as in Example 10. The properties thereof are shown in Table 3.

### [Example 15]

The polyester material BI was put in the first extruder 68 and the polyester material BS was put in the second extruder 69. These extruders 68 and 69 carried out melt extrusion when the temperature in the melt line was set to 250°C, and the flow paths of these merged immediately before this melt extrusion such that the ratio in the thickness of BU/BS became 1/1, and thus, the melted resin was coextruded in sheet form from a T die 21. This melted resin in sheet form was cast on a cooling drum 22 at 20°C. At this time of casting, an electrostatic applying contact method was used. The thus manufactured unexpanded sheet was guided to a longitudinal expanding machine 23. In this longitudinal expanding machine 23, a roll expanding method was used, and the sheet was preheated to 70°C using a number of ceramic rolls, and an IR heater was also used, and thus, the sheet was expanded in the longitudinal direction with an expansion ratio of 3.0.

Next, the gained uniaxially expanded film was guided to a tenter and preheated at 90°C, and after that, guided to a lateral expanding machine 74 so as to be expanded in the direction of the width with an expansion ratio of 4.0. After that, the film was tensed and thermofixed at a temperature of 180°C within the same tenter, and then, a slacking process was carried out at a temperature of 150°C such that the film was slacked in the direction of the width by 3%, and thus, a biaxially oriented polyester film (VIS) having a thickness of 50 µm was gained. This film corresponds to the first layer and the second layer in Table 3.

Next, the same film as the biaxially oriented polyester film (BU) having a thickness of 25 µm described in Example 13 was fabricated and an adhesive layer made of SK-Dyne 2094, made by Soken Chemical & Engineering Co., Ltd., and a curing agent E-AX, made by the same company, was formed on the surface of this film in the same procedure as in Example 13 and dried for one minute at 100°C, and thus, a film for the third layer was gained. After that, the adhesive layer in the third layer was attached to the biaxially oriented polyester film (VIS) and pressure was applied using a hand roller so as to remove air bubbles, and thus, a transparent multilayer biaxially expanded polyester film was gained. This film was evaluated in the same manner as in Example 10. The properties thereof are shown in Table 3.

### Comparative Example 6

0.003 g of tetraaza porphyrin and 5.0 g of a polymethyl methacrylate resin (Dianal BR-80) made by Mitsubishi Rayon Co., Ltd. were dissolved in a mixed solvent of 8.0 g of methyl ethyl ketone and 8.0 g of toluene, and 1.5 g was taken from this as a sample and completely dissolved using an ultrasonic cleaning machine, so that an application liquid was gained. After that, this application liquid was applied to a biaxially oriented film (0300, thickness: 25 µm) made by Mitsubishi Polyester Film Corporation. using a #24 bar coater and dried, and thus, a PDP image quality correcting film was gained. This corresponds to the third layer in Table 3. The thickness of the applied film was approximately 6 µm.

Next, 0.2 g of a near infrared ray absorbing agent (KAYASORB IRG-022, made by Nippon Kayaku Co., Ltd.) and 5.0 g of a polymethyl methacrylate resin (Dianal BR-80) made by Mitsubishi Rayon Co., Ltd. were dissolved in a mixed solvent of 8.0 g of methyl ethyl ketone and 8.0 g of toluene, and thus, an application liquid was gained. 1.5 g of this was taken as a sample and completely dissolved using an ultrasonic cleaning machine, and then, this application liquid was coated and layered on the application surface of the PDP image quality correcting film in the third layer using a #24 bar coater and dried, and thus, a multilayer film having an image quality correcting layer and a near infrared ray absorbing layer was gained. This multilayer film corresponds to the second layer and the third layer in Table 3.

Furthermore, 0.35 g of CYASORBUV-3638, made by CYTEC Industries Inc., and 5.0 g of a polymethyl methacrylate resin (Dianal BR-80) made by Mitsubishi Rayon Co., Ltd. were dissolved in a mixed solvent of 8.0 g of methyl ethyl ketone and 8.0 g of toluene, and 1.5 g of this was taken as a sample and completely dissolved using an ultrasonic cleaning machine, and thus, an application liquid for the formation of the first layer was gained. This application liquid was applied to the application surface of the multilayer film having the second layer and the third layer in accordance with the same technique as that described above and dried, and thus, a multilayer film having an ultraviolet ray absorbing layer, an infrared ray absorbing layer and an image quality correcting layer was gained. This film was evaluated in the same manner as in Example 10. The results are shown in Table 3.

**[Table 3]**

| | Example 10 | Example 11 | Example 12 | Example 13 | Example 14 | Example 15 | Comparative Example 6 |
|---|---|---|---|---|---|---|---|
| Melting point of film (°C) | 206 | 220 | 253 | 220 | 220 | 220 | - |
| First layer | AU | BU | CU | BU + adhesive layer | BU | BU + adhesive layer | Acryl binder + ultraviolet ray absorbing agent. |
| Second layer | AI | BI | CI | BI | BS | BI | Acryl binder + near infrared ray absorbing agent |
| Third layer | AS | BS | CS | BS + adhesive layer | BI + adhesive layer | BS | Polyester film + acryl binder + image quality correcting agent |
| Number of processes for attaching | 0 | 0 | 0 | 2 | 1 | 1 | 3 |
| Average transmittance of visible light having wavelength of 380 nm to 780 nm (%) *1 | 59 | 59 | 60 | 55 | 57 | 58 | 57 |
| Average transmittance of near infrared rays having wavelength of 820 nm to 1100 nm (%) *1 | 9.1 | 9.4 | 15 | 8.9 | 8.9 | 9.1 | 8.2 |
| Average transmittance of near infrared rays having wavelength of 820 nm to 1100 nm after test of exposure to solar light (%) *1 *2 | 9.4 | 9.9 | 16 | 9.4 | 9.3 | 9.4 | 8.6 |
| Uniformity in appearance *3 | No roughness on surface | No roughness on surface | No roughness on surface | No roughness on surface | No roughness on surface | No roughness on surface | Roughness on surface observed |

As is clear from Table 3, Examples 10 to 15 allow for design of products in which it is possible to reduce the number of steps for attachment required to manufacture a filter having a number of functions; blocking near infrared rays, blocking ultraviolet rays and correcting image quality, in comparison with the prior art, that is to say, Comparative Example 6. In addition, it can be seen that one independent optical filter for a plasma display having an image quality correcting layer itself can have an ultraviolet ray blocking function, in addition to a near infrared ray blocking function, and therefore, the near infrared ray absorbing agent can be prevented from deteriorating (decomposing or changing in quality), and therefore, the performance of the optical filter for a plasma display can be maintained. Furthermore, it can be seen that polyester of which the melting point is no higher than 230°C can be used, and thus, the difference in transmittance between near infrared rays and visible light can be made great.

## Claims

1. A near infrared ray absorbing filter, **characterized by** being a biaxially oriented polyester film having a near infrared ray absorbing agent, wherein the melting point of the polyester is no higher than 230°C.

2. An optical filter for plasma display, **characterized by** being a biaxially oriented film comprising a near infrared ray blocking layer made of polyester containing a near infrared ray absorbing agent and an image quality correcting layer made of polyester containing a compound which absorbs visible light having an absorption maximum wavelength in a range from 560 nm to 600 nm, wherein the layers are layered through integral molding by means of a co-extrusion method, according to which method the layers are melted and extruded together from an extruder, and the melting point of the polyester in these layers is no higher than 230°C.

3. A plasma display panel, **characterized by** comprising the near infrared ray absorbing filter according to claim 1.

4. A plasma display panel, **characterized by** comprising the optical filter for a plasma display according to claim 2.

5. A near infrared ray absorbing filter, **characterized by** being formed of a biaxially oriented film, in which a near infrared ray blocking layer made of polyester containing a near infrared ray absorbing agent and an ultraviolet ray blocking layer made of polyester containing an ultraviolet ray absorbing agent are layered.

6. A near infrared ray absorbing filter, **characterized by** being formed of a biaxially oriented film comprising a near infrared ray blocking layer made of polyester containing a near infrared ray absorbing agent and an ultraviolet ray blocking layer made of polyester containing an ultraviolet ray absorbing agent, wherein these layers are layered through integrated process by means of a co-extrusion method, according to which method the layers are melted and extruded together from an extruder .

7. A near infrared ray absorbing filter, **characterized in that** a biaxially oriented film having a near infrared ray blocking layer made of polyester containing a near infrared ray absorbing agent and a biaxially oriented film having an ultraviolet ray blocking layer made of polyester containing an ultraviolet ray absorbing agent are layered on top of each other.

8. The near infrared ray absorbing filter according to any one of claims 5 to 7, **characterized in that** the melting point of the polyester in said near infrared ray blocking layer is no higher than 230°C.

9. A plasma display panel, comprising the near infrared ray absorbing filter according to any one of claims 5 to 7, **characterized in that** the ultraviolet ray blocking layer is provided outside the near infrared ray blocking layer relative to the main body of the plasma display.

10. An optical filter for plasma display, **characterized by** being a biaxially oriented film, in which a near infrared ray blocking layer made of polyester containing a near infrared ray absorbing agent, an ultraviolet ray blocking layer made of polyester containing an ultraviolet ray absorbing agent, and an image quality correcting layer made of polyester containing a compound which absorbs visible light having an absorption maximum wavelength in a range from 560 nm to 600 nm are layered on top of each other.

11. An optical filter for plasma display, **characterized by** being a biaxially oriented film comprising a near infrared ray blocking layer made of polyester containing a near infrared ray absorbing agent, an ultraviolet ray blocking layer made of polyester containing an ultraviolet ray absorbing agent, and an image quality correcting layer made of polyester containing a compound which absorbs visible light having an absorption maximum wavelength in a range from 560 nm to 600 nm, wherein the layers are layered through integrated process by means of a co-extrusion method, according to which method the layers are melted and extruded together from an extruder.

12. An optical filter for plasma display, **characterized in that** two biaxially oriented films are layered on top of each other, one of the two biaxially oriented films comprising an ultraviolet ray blocking layer made of polyester containing an ultraviolet ray absorbing agent, and an image quality correcting layer made of polyester containing a compound which absorbs visible light having a maximum wavelength in a range from 560 nm to 600 nm, wherein the layers are layered through integrated process by means of a co-extrusion method, according to which method the layers are melted and extruded together from an extruder, and the other biaxially oriented film having a near infrared ray blocking layer made of polyester containing a near infrared ray absorbing agent.

13. An optical filter for a plasma display, **characterized in that** two biaxially oriented films are layered on top of each other, one of the two biaxially oriented comprising a near infrared ray blocking layer made of polyester containing a near infrared ray absorbing agent and an image quality correcting layer made of polyester containing a compound which absorbs visible light having a wavelength of in range from 560 nm to 600 nm, wherein these layers are layered through integrated process by means of a co-extrusion method, according to which method the layers are melted and extruded together from an extruder, and the other biaxially oriented film having an ultraviolet ray blocking layer made of polyester containing an ultraviolet ray absorbing agent.

14. The optical filter for plasma display according to any one of claims 10 to 13, **characterized in that** the melting point of the polyester in said near infrared ray blocking layer is no higher than 230°C.

15. A plasma display panel, comprising the optical filter for plasma display according to any one of claims 10 to 14, **characterized in that** the ultraviolet ray blocking layer is provided outside the near infrared ray blocking layer relative to the main body of the plasma display.
